(19) Europäisches Patentamt
European Patent Office
Office européen des brevets

(11) **EP 1 808 848 B1**

(12) **EUROPEAN PATENT SPECIFICATION**

(45) Date of publication and mention
of the grant of the patent:
**12.01.2011 Bulletin 2011/02**

(51) Int Cl.:
***G10H 1/00*** *(2006.01)*      ***H04L 7/00*** *(2006.01)*

(21) Application number: **06023558.7**

(22) Date of filing: **13.11.2006**

(54) **Music performance system,music stations synchronized with one another and computer program used therein**

Musikaufführungsystem, miteinander synchronisierte Musikstationen und darin verwendetes Computerprogramm

Système de représentation musicale, stations musicales synchronisées les unes avec les autres et programme informatique utilisé dans celles-ci

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.01.2006 JP 2006008432**

(43) Date of publication of application:
**18.07.2007 Bulletin 2007/29**

(73) Proprietor: **YAMAHA CORPORATION**
**Naka-ku**
**Hamamatsu-shi**
**Shizuoka-ken (JP)**

(72) Inventors:
 • **Matahira, Kenji**
   **Hamamatsu-shi**
   **Shizuoka-ken (JP)**
 • **Uehara, Haruki**
   **Hamamatsu-shi**
   **Shizuoka-ken (JP)**

(74) Representative: **Wagner, Karl H.**
   **Wagner & Geyer Partnerschaft**
   **Patent- und Rechtsanwälte**
   **Gewürzmühlstrasse 5**
   **80538 München (DE)**

(56) References cited:
   WO-A-01/01635          WO-A-97/37476
   US-A- 5 560 021        US-A1- 2005 056 141
   US-B1- 6 175 872       US-B1- 6 751 232

 • **MASATAKA GOTO, RYO NEYAMA, YOICHI MURAOKA: "RMCP: Remote Music Control Protocol - Design and Applications -" ICMC PROCEEDINGS 1997, 1997, pages 446-449, XP002434612 THESSALONIKI - GREECE**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This invention relates to a music performance system and, more particularly, to a music performance system having plural music stations remote from one another and permitting a user to play a tune on a music station for playback through another music station and a computer program used therein.

DESCRIPTION OF THE RELATED ART

A typical example of the music performance system is known as a music education system through a communication network, and the prior art music education system is disclosed in Japan Patent Application laid-open No. 2005-266337. United States Patent 6,751,232 B1 discloses a method for communication of synchronous data such as PCM data including monitoring a common communications link at regular intervals of time in order to determine idle periods during which the first and second data transcievers are to be synchronized. United States Patent Publication US 2005/0056141 A1 deals with a synchronization of MIDI and audio/video information between master and slave terminals using a metronome-like clicktime signal sent at regular intervals.JP 2005 266 337, includes plural music stations, a server computer and a public communication network, and the plural music stations and server computer are communicable with one another through the public communication network. A tutor occupies one of the music stations, and students occupy the other music stations. A computer system, a MIDI (Musical Instrument Digital Interface) musical instrument such as an electronic keyboard, a microphone and loudspeakers are integrated on each of the music stations.

The remote lesson is given to the students as follows. First, the tutor requests the server computer from tutor's music station to give the students a music score expressing a tune as a subject, and the music score is distributed to each student's music station. The students play the tune on the electronic keyboards, and the MIDI messages, which express the performance on each of the electronic keyboards, are transmitted from each student's music station to the server computer. The server computer transfers the MIDI messages to the music station occupied by the tutor. The tutor evaluates the performances of the tune, and returns the marks from tutor's music station through the server computer to the students on the other music stations.

In order to evaluate the performance of the tune, it is necessary to reproduce the performance on the electronic keyboard through the loudspeakers on tutor's music station. While the tutor is giving an example to the students, the MIDI messages are also transmitted from tutor's music station through the server computer to the music stations occupied by the students, and the example is reproduced through the loudspeakers on the other music stations.

While a player is performing a tune on a musical instrument, the tones are produced at selected pitches at irregular intervals. The pitch of each tone and lapse of time are memorized in a MIDI music data code, and the MIDI music data codes, which express the performance through the MIDI messages, are prepared for playbacks. In the playback, the MIDI music data codes are sequentially analyzed, and the tones are timely produced at the specified pitches on the basis of the MIDI music data codes.

The tutor and students require the playback in real time fashion for the remote lesson through the prior art music education system. However, it is impossible to share a clock between tutor's music station and the other music station occupied by the students. The music stations have clocks, respectively, and the lapse of time is measured by their own clocks. A setting work is required for the clocks.

The clocks may be once set by one another at the beginning of the playback. Otherwise, the clocks may be set by one another at regular time intervals. In case where the clocks are once set with a reset signal distributed through the communication network, there is not any countermeasure against the time lag during the remote lesson, and the synchronization is not guaranteed to the users. On the other hand, in case where the clocks are set with a time casting signal at regular time intervals, it is apprehended that the interval between the tones is disturbed in the playback, because the clocks are suddenly set ahead or back during the measurement of the lapse of time.

Thus, the poor synchronization is the problem inherent in the prior art music performance system.

SUMMARY OF THE INVENTION

It is therefore an important object of the present invention to provide a music performance system, music stations of which are well synchronized with each other, as claimed in music performance system claim 1 and music station claims 11 and 17.

It is another important object of the present invention to provide a music station which form a part of the music performance system.

It is also an important object of the present invention to provide a computer program used in the music stations.

To accomplish the object, the present invention proposes to set an internal clock by a standard clock on the condition that a piece of music data is not found in a predetermined time period.

In accordance with one aspect of the present invention, there is provided a music performance system for performing a tune produced at a remote place comprising a communication network for propagating at least pieces of music data and pieces of time data therethrough, a standard clock measuring a standard time, a music station connected to the communication network and including a music data source producing the pieces of music data expressing a performance of a tune, an internal clock measuring a lapse of time, a time keeper connected to the music data source and the internal clock, determining a time in the lapse of time at which each of the pieces of music data is produced and pairing the pieces of time data each expressing the time with the pieces of music data, respectively, a communication module received with the pieces of music data respectively paired with the pieces of time data and putting the pieces of music data respectively paired with the pieces of time data onto the communication network, a monitor measuring a time period between two of the pieces of music data handled by the communication module and initiating a time setting work when the time period becomes equal to a predetermined time period and a clock setter connected to the internal clock, the monitor and the standard clock and setting the internal clock by the standard clock when the monitor determines to initiate the time setting work, and another music station connected to the communication network and including another internal clock measuring another lapse of time, a tone generator producing tones respectively expressed by the pieces of music data, another communication module receiving the pieces of music data respectively paired with the pieces of time data from the communication network, a data buffer connected to the aforesaid another communication module for accumulating the pieces of music data respectively paired with the pieces of time data, comparing the time expressed by each of the pieces of time data with the time indicated by the aforesaid another internal clock and supplying the piece of music data paired with the aforesaid each of the pieces of time data to the tone generator when the time expressed by the aforesaid each of the pieces of time data is consistent with the time indicated by the aforesaid another internal clock, another monitor measuring a time period between the pieces of music data handled by the aforesaid another communication module and initiating the time setting work when the time period becomes equal to the predetermined time period and another clock setter connected to the aforesaid another internal clock, the aforesaid another monitor and the standard clock and setting the aforesaid another internal clock by the standard clock when the aforesaid another monitor determines to initiate the time setting work.

In accordance with another aspect of the present invention, there is provided a music station connected to a communication network, and comprising a music data source producing the pieces of music data expressing a performance of a tune, an internal clock measuring a lapse of time, a time keeper connected to the music data source and the internal clock, determining a time in the lapse of time at which each of the pieces of music data is produced and pairing the pieces of time data each expressing the time with the pieces of music data, respectively, a communication module received with the pieces of music data respectively paired with the pieces of time data and putting the pieces of music data respectively paired with the pieces of time data onto the communication network, a monitor measuring a time period between two of the pieces of music data handled by the communication module and initiating a time setting work when the time period becomes equal to a predetermined time period, and a clock setter connected to the internal clock, the monitor and a standard clock for measuring a standard time and setting the internal clock by the standard clock when the monitor determines to initiate the time setting work.

In accordance with yet another aspect of the present invention, there is provided a music station connected to a communication network, and comprising an internal clock measuring a lapse of time, a tone generator producing tones respectively expressed by pieces of music data, a communication module receiving the pieces of music data respectively paired with pieces of time data each expressing a time, at which associated one of the pieces of music data is produced, from the communication network, a data buffer connected to the communication module for accumulating the pieces of music data respectively paired with the pieces of time data, comparing the time expressed by each of the pieces of time data with the time indicated by the internal clock and supplying the piece of music data paired with the aforesaid each of the pieces of time data to the tone generator when the time expressed by the aforesaid each of the pieces of time data is consistent with the time indicated by the internal clock, a monitor measuring a time period between two of the pieces of music data handled by the communication module and initiating a time setting work when the time period becomes equal to a predetermined time period, and a clock setter connected to the internal clock, the monitor and the standard clock and setting the internal clock by the standard clock when the monitor determines to initiate the time setting work.

In accordance with still another aspect of the present invention, there is provided a computer program representative of a method for setting an internal clock by a standard clock, and comprising the steps of a) measuring a time period from a piece of music data to the next piece of music data with an internal clock, b) determining whether or not the time period becomes equal to a predetermined time period, c) repeating the steps a) and b) while the answer at the step b) is given negative, d) reading a standard time from a standard clock without the execution of the step c) when the answer at the step b) is given affirmative, and e) setting the internal clock by the standard clock.

BRIEF DESCRIPTION OF THE DRAWINGS

The features and advantages of the music performance system, music station and computer program will be more clearly understood from the following description taken in conjunction with the accompanying drawings, in which

Fig. 1 is a block diagram showing the system configuration of a music performance system according to the present invention,

Fig. 2 is a block diagram showing a data transmission and reception through a packet switching,

Fig. 3 is a time chart showing a setting work on an internal clock for a time stamp,

Fig. 4 is a block diagram showing the system configuration of another music performance system according to the present invention,

Fig. 5 is a time chart showing a setting work on an internal clock for a time stamp,

Fig. 6 is a block diagram showing a data transmission and reception carried out by yet another music performance system according to the present invention, and

Fig. 7 is a block diagram showing a data transmission and reception carried out by still another music performance system according to the present invention.

DESCRIPTION OF THE PREFERRED EMBODIMENTS

A music performance system is used for performing a tune produced at a remote place. A remote lesson and a remote concert are example of the application field.

The music performance system comprises a communication network, a standard clock, a music station and another music station. The music stations are connected to the communication network, and at least pieces of music data and pieces of time data are propagated through the communication network between the music stations. The standard clock may be incorporated in a server, which is also connected to the communication network for intermediation between the music stations. Otherwise, an internal clock, which is incorporated in one of the music stations, may serve as the standard clock. The standard clock measures a standard time.

One of the music stations includes a music data source, an internal clock, a time keeper, a communication module, a monitor and a clock setter. The music data source produces the pieces of music data, which express a performance of a tune, and the internal clock measures a lapse of time. The pieces of music data are usually intermittently output from the music data source. However, some pieces of music data, which expresses a chord, by way of example, are concurrently output from the music data source.

The time keeper is connected to the music data source and internal clock so as to impress a time stamp on each of the pieces of music data. In detail, when the music data source supplies a piece of music data to the time keeper, the time keeper reads the present time from the internal clock, and determines the time at which the piece of music data is supplied thereto. The time keeper produces a piece of time data expressing the time, and pairs the piece of time data with the piece of music data. Thus, the time keeper respectively pairs the pieces of music data with the pieces of time data.

The communication module is connected between the time keeper and the communication network. The communication module is received with the pieces of music data, which are respectively paired with the pieces of time data, and puts the pieces of music data respectively paired with the pieces of time data onto the communication network. The pieces of music data paired with the pieces of time data are assumed to be transmitted to another of the music data station, which is referred to as a destination in order to discriminate it from the above-described music station.

The monitor is provided in association with the communication module, and measures a time period between two of the pieces of music data handled by the communication module. The pairs of pieces of music data and pieces of time data which are transmitted to the destination are the object to be monitored. If other pieces of music data paired with the pieces of time data are received at the communication module, these pairs of pieces of music data and pieces of time data are also the object to be monitored.

When the monitor admits that the time period becomes equal to a predetermined time period, a time setting work is to be initiated. The time setting work is carried out by the clock setter. The clock setter is connected to the monitor, internal clock and the standard clock, and sets the internal clock by the standard clock. Thus, the time setting work is carried out on the condition that any piece of music data is not transmitted from or received at the communication network. As a result, the internal clock is well synchronized with the standard clock without disturbance of any data processing on the pieces of music data.

The destination, i.e., another music station is connected to the communication network, and produces the tones expressed by the pieces of music data at time intervals equal to those of the pieces of music data output from the music data source.

The destination includes another internal clock, a tone generator, another communication module, a data buffer, another monitor and another clock setter. The internal clock measures a lapse of time, and the tone generator has a capability to produce the tones respectively expressed by the pieces of music data.

The communication module is connected to the communication network, and receives the pieces of music data respectively paired with the pieces of time data. The data buffer is connected to the communication module, and accumulates the pieces of music data respectively paired with the pieces of time data. The data buffer compares the time expressed by each of the pieces of time data with the time indicated by the internal clock to see whether or not the time to process the associated piece of music data comes. When the time comes, the data buffer supplies the piece of music data to the tone generator, and the tone generator produces the tone expressed by the piece of music data. Thus, the tones are sequentially produced at the time intervals expressed by the pieces of the time data. However, a time lag between the internal clocks is unavoidable. The time setting work is also required for the internal clock of the destination.

The monitor measures a time period between the pieces of music data handled by the communication module. The pieces of music data, which arrive at the communication module, are the object to be monitored. If pieces of music data are transmitted from the destination to the music station already described, these pieces of music data are also the object to be monitored.

When the monitor admits that the time period becomes equal to the predetermined time period, the monitor determines that the time setting work is to be carried out. The clock setter is connected to the internal clock, monitor and the standard clock. When the time setting work starts, the clock setter acquires a piece of time data expressing the standard time from the standard clock, and sets the internal clock by the standard clock. Thus, the synchronization between the internal clock and the standard clock is also achieved through the time setting work.

As will be understood, the internal clocks of the music stations are set by the standard clock so that the music performance system keeps the internal clocks of music stations to measure the lapse of time synchronously. For this reason, the tones are produced at the time intervals equal to those expressed by the pieces of time data.

The predetermined time period does not take place during performances of music tunes. Therefore, the expiry of predetermined time period means that the performance is completed or suspended. The time setting work is carried out after the predetermined time period so that the performance is not disturbed by the time setting work.

First Embodiment

System Configuration

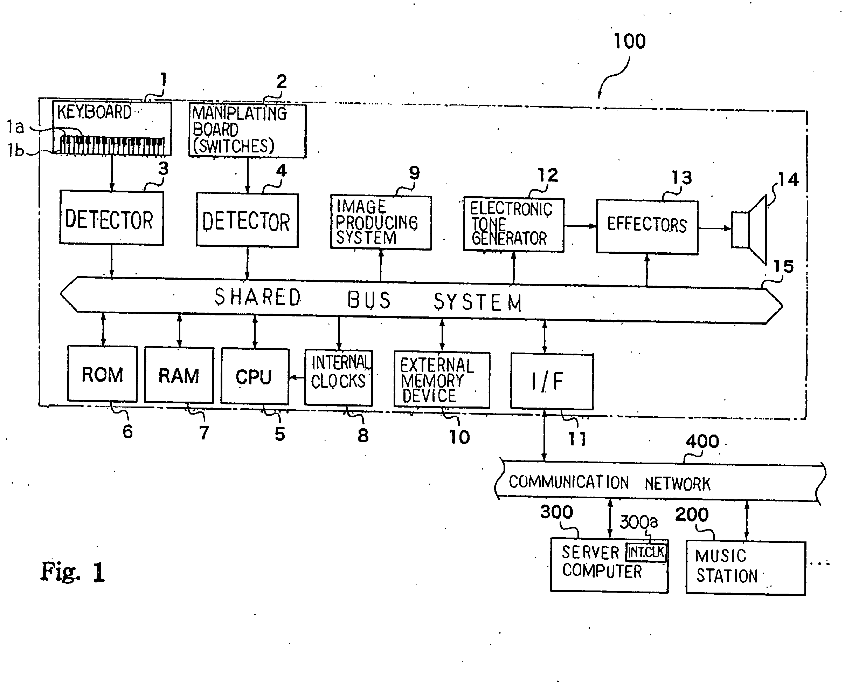

Referring first to figure 1 of the drawings, a music performance system embodying the present invention comprising plural music stations 100, 200, ... a server computer 300 and a communication network 400. Although two music stations 100 and 200 are incorporated in the music performance system, the music performance system includes more than two music stations, and dots, which are seen on the right side of the block 200, stand for other music stations. The plural music stations 100, 200, ... are similar in system configuration to one another, and only the music station 100 is illustrated in detail.

The music performance system is assumed to be used for the remote lesson. The music station 100 is assigned to a tutor, and students occupy the other music stations 200. For this reason, the music station 100 and the other music stations 200, ... are hereinafter referred to as "tutor station 100" and "student stations 200, .... ", respectively.

The communication network 400 includes a public network and exchangers. The tutor station 100, student stations 200, .... and server computer 300 are connected to the public network, and the tutor station 100 and student stations 200, .... are communicable with the server computer 300 through the public network and exchangers, i.e., the communication network 400. If the student stations 200, ... are incorporated in an intranet such as, for example, a LAN (Local Area Network), other system components of the intranet participate in the communication between the student stations 200, ... and the server 300, and, for this reason, form parts of the communication network 400.

The server computer 300 has a data processing capability, and includes an information processor, a memory system, a transmitter, a receiver, a facility for a packet assembly and disassembly and an internal clock 300a. The server computer 300 intermediates between the tutor station 100 and the student stations 200, ...., and pieces of music data, pieces of time data, pieces of control message data, pieces of control parameter data and pieces of program data are propagated between the tutor station 100 and the student stations 200, ... through the communication network 400.

The pieces of music data, pieces of control parameter data and pieces of program data are stored in the memory system, and are selectively downloaded from the server computer 300 to the tutor station 100 and student stations 200, ... upon reception of a request for download. Various computer systems are known and sold in the market, and one of these computer systems may be employed as the server computer 300.

The internal clock 300a is indicative of the passage of time, and the tutor station 100 and student stations 200, ... intermittently set their internal clocks aright by the internal clock 300a without any disturbance of performance of a tune as will be described hereinlater in detail.

Since the music stations 100, 200, .... are similar in hardware to one another, description is hereinafter made on the music station serving as the tutor station 100. The system components of the other music stations 200, .... are labeled with the references designating corresponding system components of the tutor station 100 without detailed description.

The tutor station 100 includes a keyboard 1, a manipulating board 2, a detector 3 for the keyboard 1 and a detector 4 for the manipulating board 2. The keyboard 1 has plural black keys 1a, plural white keys 1b and other manipulators (not shown) for specifying effects and register and etc. Pedals are examples of the other manipulators. A user selectively depresses or releases the black keys 1a, white keys 1b and other manipulators (not shown) during his or her performance. The detector 3 is connected to the keyboard 1, and periodically checks the keyboard 1 to see whether or not the user depresses any one of the black keys 1a, white keys 1b and other manipulators (not shown). Switches, keys and levers are provided on the manipulating board 2, and the detector 4 is connected to the manipulating board 2. The user gives his or her instructions to the tutor station 100 and students on the student stations 200, ..... through the manipulating board 2. The detector 4 is also periodically checks the manipulating board 2 to see whether or not the user changes the switches, keys and levers.

The tutor station 100 further includes a central processing unit 5, which is an origin of the information processing capability, a read only memory 6, a random access memory 7 and a shared bus system 15. The central processing unit 5, read only memory 6 and random access memory 7 are respectively abbreviated as "CPU", "ROM" and "RAM" in figure 1. The detectors 3 and 4, central processing unit 5, read only memory 6 and random access memory 7 are connected to the shared bus system 15 so that the central processing unit 5 is communicable with the read only memory 6 and random access memory 7 through the shared bus system 15.

The central processing unit 5 is the origin of information processing capability, and a computer program for remote lessons runs on the central processing unit 5 for accomplishing given jobs. The computer program is broken down into a main routine program and subroutine programs.

Different sorts of read only memory devices such as, for example, semiconductor electrically erasable and programmable memory devices and semiconductor mask read only memory devices form in combination the read only memory 6. In this instance, the computer program for remote lessons is downloaded from the server computer 300 so that a basic operating system and several application programs are stored in the read only memory 6. The read only memory 7 offers temporary data storage or a working area to the central processing unit 5

The tutor station 100 further includes an internal clock 8, an image producing system 9, an external memory unit 10 and a communication interface 11, which is abbreviated as "I/F" in figure 1. The image producing system 9, external memory unit 10 and communication interface 11 are connected to the shared bus system 15, and the internal clocks 8 is functionally connected to the central processing unit 5.

In this instance, the internal clocks 8 are implemented by software. Some of the internal clocks 8 give the central processing unit 5 timing to branch certain subroutine programs, and a lapse of time is measured with another internal clock 8. The internal clock 8 is assigned to measurement of time interval between the packets transmitted from and received at the tutor station 100, and is hereinafter referred to as "time-setting clock 8" in order to be discriminated from the other internal clocks 8.

The image producing system 9 has a graphic controller, a liquid crystal display panel, a driving circuit and an array of light emitting diodes. The central processing unit 5 supplies pieces of image data to the graphic controller, and the graphic controller produces visual images, which are expressed by the pieces of image data, on the liquid crystal display panel. The central processing unit 5 further supplies a piece of control data to the driving circuit, and the driving circuit energizes the light emitting diode or diodes on the basis of the piece of control data.

A huge storage space is created in the external memory unit 10, and is of the non-volatile memory. The computer program, which is downloaded from the server computer 300, is stored in the external memory unit 10, and is transferred from the external memory unit 10 to the random access memory 7 before the remote lesson. This feature is desirable, because users easily update the computer program. The external memory unit 10 may be implemented by an FDD (Flexible Disk Driver) and flexible disks, an HDD (Hard Disk Driver) unit, a CD-ROM (Compact Disk-ROM) unit and an MO (Magneto-Optical) unit.

The communication interface 11 is connected between the communication network 400 and the shared bus system 15. Packets are put on the communication network 400 through the communication interface 11, and other packets are received at the communication interface 11. The payloads of packets are a set of pieces of program data expressing the computer program, a set of pieces of music data expressing a performance on the keyboard 1 of the tutor station 100 or a performance on the keyboard 1 of the student station 200, ....., a piece of control parameter data, a piece of time data expressing lapse of time and a piece of control message data expressing a request for downloading, transmission of the piece of time data and so forth.

The tutor station 100 further includes an electronic tone generator 12, effectors 13 and a sound system 14. The electronic tone generator 12, effectors 13 and sound system 14 are connected to the shared bus system 15, and cooperate for producing tones under the control of central processing unit 5.

The pieces of music data or music data codes are supplied to the electronic tone generator 12. A waveform memory (not shown) and plural channels are incorporated in the electronic tone generator 12, and the pieces of waveform data are read out from the waveform memory through the channel or channels on the basis of the music data codes. The pieces of waveform data are merged into a digital audio signal, and the digital audio signal is supplied to the effectors 13. If the effectors 13 are requested to impart an artificial expression to the tones, the effectors 13 modify the digital audio signal with the piece of effect data, and supply the modified audio signal through a digital-to-analog converter to the sound system 14. If not, the digital audio signal passes through the effectors 13, and reaches the sound system 14. The sound system has a power amplifier, an equalizer and loud speakers, and produces the tones from the analog audio signal.

Computer Program

As described hereinbefore, the computer program for remote lessons is broken down into the main routine program and subroutine programs. While the central processing unit 5 is reiterating the main routine program, the tutor and students give their instructions to the music stations 100, 200, ....., and communicate with one another through the music stations 100, 200, ..., server computer 300 and communication network 400.

When the tutor or student starts to finger a piece of music on the keyboard 1 of his music station 100 or 200, ...., the main routine program starts periodically to branch to a subroutine program for a music data transmission and reception. While the central processing unit 5 is reiterating the main routine program and subroutine program for music data transmission, the time-setting clock 8 may inform that a predetermined time period is expired. In this situation, the subroutine program for music data transmission branches to another subroutine program for time-setting. In this instance, the predetermined time period is 10 seconds. Description is hereinafter made on the music data transmission and reception through the subroutine program and the time-setting work through another subroutine program.

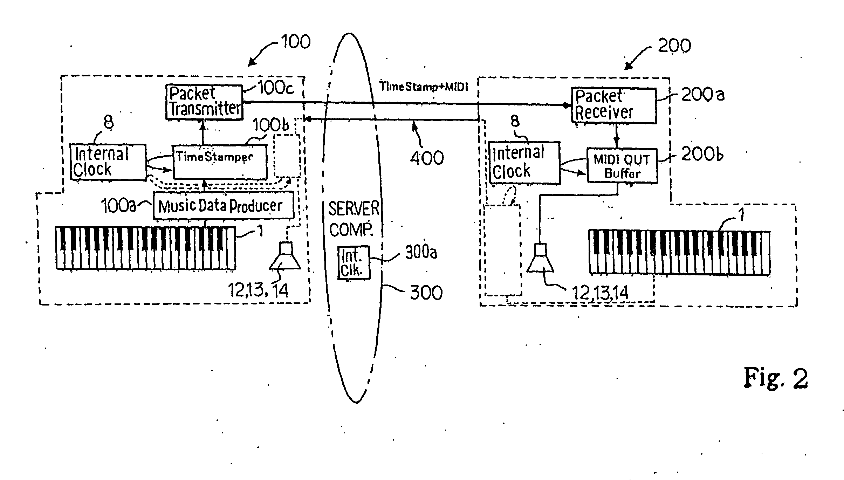

Figure 2 shows the music data transmission and reception accomplished through the execution of the subroutine program for music data transmission on the tutor station 100 and the student station 200. For simplification, music data codes are assumed to be transmitted from the tutor station 100 to the student station 200. While the student is performing a tune on the keyboard 1, the music data codes are transmitted from the student station 200 to the tutor station 100, and the student station 200 and tutor station 100 behave as similar to the tutor station 100 and student station 200, respectively. A music data producer 100a, a time stamper 100b and packet transmitter 100c are realized by the subroutine program, which runs on the central processing unit 5, together with the random access memory 7, detector 3 and communication interface 11 on the tutor station 100. Similarly, a packet receiver 200a and a MIDI OUT buffer 200b are realized by the subroutine program, which runs on the central processing unit 5, together with the random access memory 7 and communication interface 11. A box drawn by broken lines in the tutor station 100 stands for a packet receiver and a MIDI OUT buffer, and a box drawn by broken lines in the student station 200 stands for a music data producer, time stamper and packet transmitter. The music data codes are assumed to be produced in accordance with the MIDI protocols.

While the tutor is performing the piece of music on the keyboard 1, the detector 3 reports the black and white keys 1a/ 1b and other manipulators selectively depressed and released by the tutor to the central processing unit 5, and the central processing unit 5 memorizes the tones and effects to be imparted to the tones in the MIDI music data codes as the music data producer 100a. For this reason, the MIDI music data codes intermittently arrive at the time stamper 100b.

The time stamper 100b reads the present time from the internal clock 8 for time stamp, and prepares time data codes. The time stamper 100b adds the time data codes representative of the arrival time to the MIDI music data codes. The time stamper 100b supplies the MIDI music data codes together with the time data codes to the packet transmitter module 100c, and the packet transmitter module 100c assembles the address assigned to the student station 200, MIDI music data codes and time data codes into packets. Thereafter, the packet transmitter module 100c transmits the packets to the server computer 300 through the communication network 400, and the server computer 300 transfers the packets to the student station 200 through the communication network 400.

The packets intermittently arrive at the packet receiver module 200a, and are disassembled. The MIDI music data codes, which are respectively accompanied with the time data codes, are taken out from the packets through the disassembling work, and are stored in the MIDI OUT buffer 200b.

The MIDI OUT buffer checks the internal clock 8 for time stamp to see whether or not the present time is later than the time expressed by the time data code by a predetermined time. The predetermined time is, by way of example, 0.3 second. While the MIDI OUT buffer is finding the answer negative, the MIDI OUT buffer 200b keeps the music data codes therein. When the predetermined time is expired, the MIDI OUT buffer 200b supplies the MIDI music data codes to the electronic tone generator 12 and effectors 13, and the tones are radiated from the sound system 14. Although the time lag is introduced between performance on the tutor station 100 and the tones generated in the student station 200, the tones are produced at the time intervals equal to those of the performance on the tutor station 100. For this reason, the student hears tutor's example as if the tutor gives the example to him or her on the student station 200.

While the student is fingering on the keyboard 1 for a tune, an address assigned to the tutor station 100, the MIDI music data codes and time data codes are assembled into packets, and the packets are transmitted from the student station 200 through the server computer 300 to the tutor station 100. In the remote lesson, the packets are transmitted from the tutor station 100 to the student station 200 and vice versa so that the tutor can teach his or her student in the real time fashion.

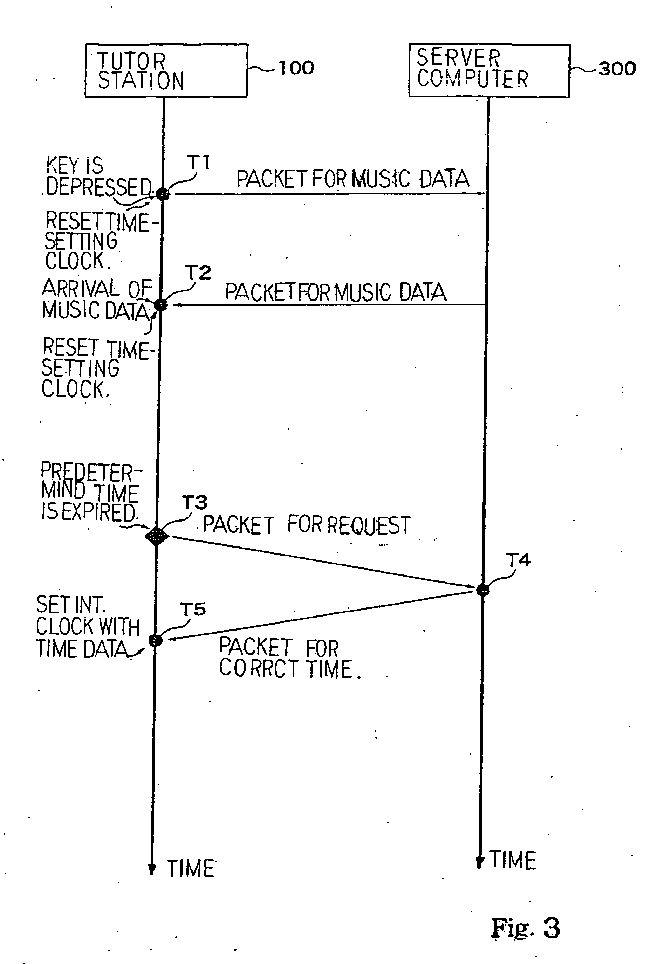

Figure 3 shows the time setting work through the subroutine program. Although T1, T2, T3 and T5 are indicative of the time read on the internal clock 8 for time stamp, the lapse of time, which is measured by the time-setting clock 8, is also indicated by T1, T2, T3 and T5 for the sake of simplicity. T4 is indicative of the time read on the internal clock 300a.

When the tutor station 100 and student stations 200, .... inform the server computer 300 of the initiation of a remote lesson, the server computer 300 prepares packets containing a piece of time data indicative of the present time on the internal clock 300a, and transmits the packets to the tutor station 100 and student stations 200, .... The packets arrive at the packet receiver module of the tutor and student stations 100, 200, ...., and the internal clocks 8 for the time stamp are set with the piece of time data. Thus, the internal clocks 8 for the time stamps are set by the internal clock 300a at the initiation of remote lesson.

The tutor station 100 is assumed to transmit a packet, in which at least a MIDI music data code is packaged, at time T1 from the packet transmitter module 100c toward the server computer 300. The server computer 300 checks the header of the packet, and knows that the packet is directed to the student station 200. The packet is relayed from the server computer 300 to the student station 200. After the transmission of the packet, the time-setting clock 8 is reset to zero, and restarts to measure the lapse of time from the transmission of packet.

A packet arrives at the packet receiver module of the tutor station 100 at time T2. The packet is transmitted from the student station 200 through the server computer 300. The tutor station 100 examines the packet to see what sort of data is the payload. At least one MIDI music data code is found in the packet so that the at least one MIDI music data code is accumulated in the MIDI OUT buffer of the tutor station 100. The time-setting clock 8 is checked for the arrival time, and the lapse of time is read out from the time-setting clock 8. The tutor station 100 judges whether or not the lapse of time between time T1 and time T2 is shorter than the predetermined time period, i.e., 10 seconds. If the lapse of time between time T1 and time T2 is shorter than the predetermined time period, and the answer is given affirmative, then any time setting work is not carried out, and the time-setting clock 8 is reset to zero, again. The time-setting clock 8 restarts to measure the lapse of time from the arrival of the packet.

The packet receiver module of tutor station 100 is periodically checked to see whether or not a music data code arrives, and the time-setting clock 8 is also periodically checked to see whether or not the lapse of time is equal to the predetermined time period. While any music data code is not being found in both of the packet transmitter module 100c and packet receiver module, the above-described jobs are repeated.

Any music data code is neither transmitted to nor received from the server computer 300 between time T2 and T3. The predetermined time is expired at time T3. Then, a piece of control message data and a piece of time data expressing time T3 are packaged in a packet, and the packet is transmitted from the packet transmitter module 100c to the server computer 300. The piece of control message data expresses a request for transmission of correct time data.

The packet arrives at time T4. The server computer 300 checks the header of the packet for the destination, and acknowledges that the packet is directed thereto. Then, the server computer 300 responds to the request for the transmission of correct time. The server computer 300 reads out the present time T4 from the internal clock 300a, and adds the piece of time data, which expresses present time T4, to the payload of the received packet. As a result, the piece of time data expressing T3, request for transmission of time data and piece of time data expressing time T4 are packaged in a packet to be transmitted to the tutor station 100. The packet is transmitted from the server computer 300 to the tutor station 100.

The packet arrives at the tutor station 100 at time T5. The tutor station 100 checks the packet to see what sort of data is the payload. The piece of time data expressing T3, piece of control message data expressing the request for transmission and piece of time data expressing time t4 are found in the packet. Then, the tutor station 100 knows that the server computer 300 has responded to the request, and starts the time-setting work.

In the time-setting work, the arrival time T4 is estimated as $(T3 + T5)/2$. In detail, the time $(T3 + T5)/2$ is subtracted from arrival time T4, and determines the time difference $\Delta t$, i.e., $\{(T3 + T5)/2 - T4\}$. If the time difference $\Delta t$ is positive, the internal clock 8 for the time stamp is put back by the time difference $\Delta t$. On the other hand, if the time difference $\Delta t$ is negative, the internal clock 8 for time stamp is put ahead by the time difference $\Delta t$. Thus, the internal clock 8 for the time stamp is set by the internal clock 300a.

The student stations 200, .... also carry out the time-setting work. As a result, the internal clocks 8 for the time stamp on all the music stations 100, 200, .... are set by the internal clock 300a, and the internal clocks 8 for the time stamp make the tutor station 100 and student stations 200, .... well synchronized. Since the time-setting work is carried out in the idling state, i.e., any music data code is produced on both tutor and student stations 100, 200, ..., the performance on the music stations 100, 200, .... is not disturbed by the time setting work.

As will be understood from the foregoing description, the internal clocks 8 for the time stamp are set by the internal clock 300a during the remote lesson on the condition that any music data code is not produced on the music stations 100, 200, .... For this reason, a time lag between the internal clocks 8 for the time stamp is ignorerable. As a result, the music stations 100, 200, ... are well synchronized in the remote lesson.

Second Embodiment

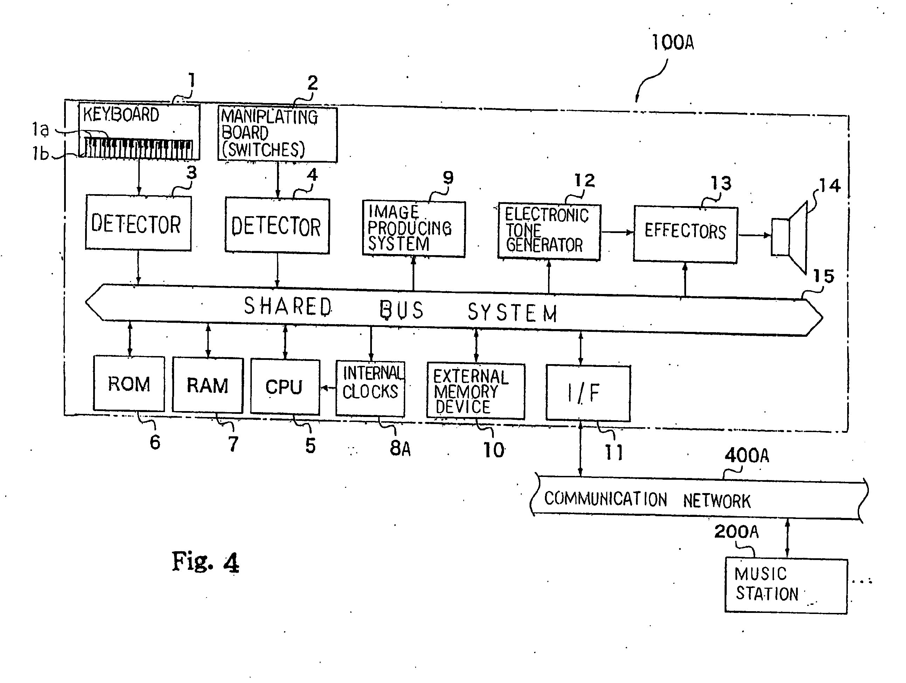

Turning to figure 4 of the drawings, another music performance system embodying the present invention comprises plural music stations 100A, 200A, ... and a communication network 400A. Comparing figure 4 with figure 1, it is understood that the server computer 200 is not incorporated in the music performance system implementing the second embodiment. The music stations 100A, 200A, ... and communication network 400A are similar in hardware to the music stations 100, 200, ... and communication network 400. For this reason, detailed description on the system configuration is omitted for avoiding repetition except for internal clocks 8A, and other component devices of the music stations 100A, 200A, .... are labeled with the references designating the corresponding component devices of the music stations 100, 200, ....

One of the internal clocks 8A of the tutor station 100A is assigned to the time stamper 100b. However, any internal clock 8A of the tutor station 100A is not used for a time setting work. On the other hand, one of the internal clocks 8A of each student station 200A,... is assigned to the time stamper, and another of the internal clocks 8A of each student station 200A, ... is used in the time setting work. This is because of the fact that the internal clocks 8A for the time stamp of each student station 200A, ... is set by the internal clock 8A for the time stamp of the tutor station 100A.

A computer program, which runs on the central processing unit 5, is also broken down into a main routine program and subroutine programs. The main routine program and subroutine program for a packet transmission are similar to those employed in the first embodiment except that the packets are directly addressed to another music station 100A or 200A ,....

A difference from the computer program employed in the first embodiment is that a subroutine program for a time setting work is incorporated only in the computer program installed in the student stations 200A, ..... In other words, the subroutine program for the time setting work does not form any part of the computer program installed in the tutor station 100A.

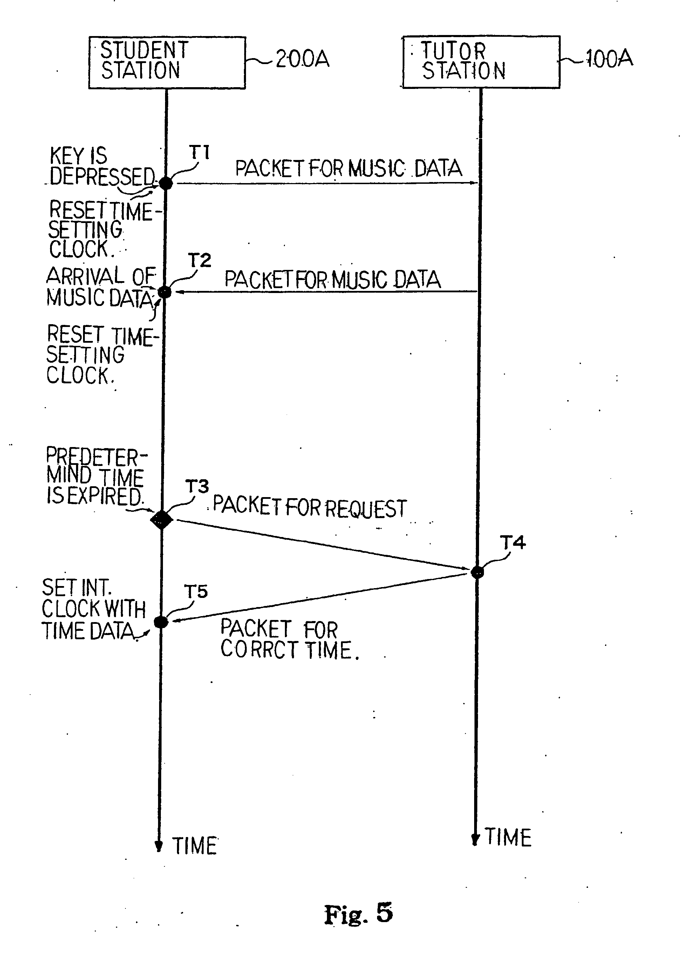

As described hereinbefore, all the internal clocks 8 for the time stamp of the student stations 200A, ... are set by the internal clock 8 for the time stamp as shown in figure 5.

The student station 200A is assumed to transmit a packet, in which at least a MIDI music data code is packaged, at time T1 from the packet transmitter module toward the tutor station 100A. After the transmission of the packet, the time-setting clock 8A is reset to zero, and restarts to measure the lapse of time from the transmission of packet.

A packet arrives at the packet receiver module 200a of the student station 200A at time T2. The packet is transmitted from the tutor station 100A through the communication network 400A. The student station 200A examines the packet to see what sort of data is the payload. At least one MIDI music data code is found in the packet so that the at least one MIDI music data code is accumulated in the MIDI OUT buffer 200b. The time setting clock 8A is checked for the arrival time, and the lapse of time is read out from the time setting clock 8A. The student station 200A judges whether or not the lapse of time between time T1 and time T2 is shorter than the predetermined time period, i.e., 10 seconds. The lapse of time between time T1 and time T2 is shorter than the predetermined time period, and the answer is given affirmative. Then, any time setting work is not carried out, and the time setting clock 8A is reset to zero, again. The time setting clock 8A restarts to measure the lapse of time from the arrival of the packet.

The packet receiver module 200a of student station 200A is periodically checked to see whether or not a music data code arrives, and the time setting clock 8A is also periodically checked to see whether or not the lapse of time is equal to the predetermined time period. While any music data code is not being found in both of the packet transmitter module and packet receiver module 200a, the above-described jobs are repeated.

Any music data code is neither transmitted to nor received from the tutor station 100A between time T2 and T3. The predetermined time period is expired at time T3. Then, a piece of control message data and a piece of time data expressing time T3 are packaged in a packet, and the packet is transmitted from the packet transmitter module to the tutor station 100A. The piece of control message data expresses a request for transmission of correct time data.

The packet arrives at the tutor station 100A at time T4. The tutor station 100A checks the header of the packet for the origin of packet, and acknowledges that the packet is transmitted from the student station 200A. Then, the tutor station 100A responds to the request for the transmission of correct time. The tutor station 100A reads out the present time T4 from the internal clock 8A for the time stamp, and adds the piece of time data, which expresses the present time T4, to the payload of the received packet. As a result, the address of student station 200A, piece of time data expressing T3, request for transmission of time data and piece of time data expressing time T4 are assembled into a packet. The packet is transmitted from the tutor station 100A to the student station 200A.

The packet arrives at the student station 200A at time T5. The student station 200A checks the packet to see what sort of data is the payload. The piece of time data expressing T3, piece of control message data expressing the request for transmission and piece of time data expressing time t4 are found in the packet. Then, the student station 200A knows that the tutor station 100A has responded to the request, and starts the time-setting work.

In the time-setting work, the arrival time T4 is estimated as $(T3 + T5)/2$. In detail, the time $(T3 + T5)/2$ is subtracted from arrival time T4, and determines the time difference $\Delta t$, i.e. , $\{(T3 + T5)/2 - T4\}$. If the time difference $\Delta t$ is positive, the internal clock 8A for the time stamp is put back by the time difference $\Delta t$. On the other hand, if the time difference $\Delta t$ is negative, the internal clock 8A for time stamp is put ahead by the time difference $\Delta t$. Thus, the internal clock 8A for the time stamp is set by the internal clock 8A of the tutor station 100A.

As will be understood from the foregoing description on the second embodiment, the advantages of the first embodiment are accomplished without any server computer. The system configuration of the second embodiment is simpler than that of the first embodiment.

Third Embodiment

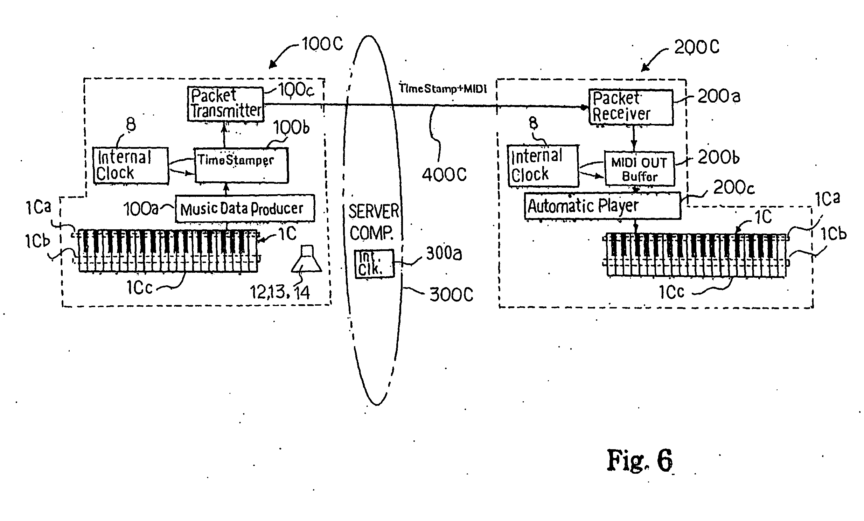

The music performance system embodying the third embodiment is illustrated in figure 6. The music performance system is used for a remote concert, and comprises music stations 100C, 200C, a server computer 300C and a communication network 400C. The music stations 100C/ 200C and server computer 300C are connected to the communication network 400C. The music station 100C is installed in a studio, and a human player plays tunes on the music station 100C. The music station 200C is put in a concert hall. Audience is assembled in the concert hall, and the performance on the music station 100C is offered to the audience through the other music station 200C. For this reason, music data codes are unidirectionally transmitted from the music station 100C toward the other music station 200C.

The electronic keyboards 1 are replaced with automatic player pianos 1C. The other components on the music stations 100C and 200C are similar to those on the music stations 100 and 200. For this reason, the other components are labeled with the references designating the corresponding components on the music stations 100 and 200.

The automatic player piano 1C includes an array of sensors 1Ca, an array of solenoid-operated actuators 1Cb and an acoustic piano 1Cc. In this instance, both of the array of sensors 1Ca and array of solenoid-operated actuators 1Cb are incorporated in each of the automatic player pianos 1C. The array of sensors 1Ca and array of solenoid-operated actuators 1Cb may be deleted from the automatic player piano 1C on the music station 200C and the automatic player piano 1C on the music station 100C, respectively.

Black keys, white keys and pedals are monitored with the sensors I Ca, and the movements of black keys, white keys and pedals are reported from the sensors 1Ca to the music data producer 100a through detecting signals. The music data producer 100a analyzes the pieces of motion data, which the detecting signals contain, and produces music data codes expressing the performance on the acoustic piano 1Cc.

The array of solenoid-operated actuators 1Cb are provided in association with the black keys, white keys and pedals so that the black keys, white keys and pedals are moved without any fingering of a human player. The automatic player 200c analyzes the music data codes, and determines target trajectories for the black keys, white keys and pedals to be moved, and selectively energizes the solenoid-operated key actuators so as to make the black keys, white keys and pedals travel on the target trajectories. If a black key, white key or pedal is retarded or advanced, the automatic player 200c accelerates or decelerates the black key, white key or pedal through a servo control. As a result, the black keys, white keys and pedals are formed to travel on the target trajectories, which are same as those of the black keys, white keys and pedals of the acoustic piano 1Cc on the music station 100C. Thus, the automatic player 200c reenacts the performance on the acoustic piano 1Cc.

The computer program installed in the music station 100C is broken down into a main routine program and subroutine programs. The main routine program is same as that of the music stations 100, 200, .... One of the subroutine programs is assigned to the packet transmission. Since the packet transmission is unidirectional, the subroutine program in the music station 100C is prepared for the transmission of packets, and neither packet receiver module nor MIDI OUT buffer is incorporated in the subroutine program for the music station 100C. A subroutine program for the time setting work is same as that of the first embodiment, and the internal clock 8 for the time stamp is set by the internal clock 300a of the server computer 300.

The computer program installed in the music station 200C is also broken down into a main routine program and subroutine programs. The main routine program is same as that of the music stations 100, 200, .... Since the packets are only received by the music station 200C, the subroutine program for the packet transmission is simpler than that of the first embodiment, and neither packet transmitter module 100c nor time stamper 100b is incorporated in the subroutine program for the music station 200C. A subroutine program for the time setting work is same as that of the music stations 100, 200, ....

As will be understood from the foregoing description on the third embodiment, the music performance station is used for the remote concert, and the packets are unidirectional transmitted from the music station 100C to the music station 200C.

Fourth Embodiment

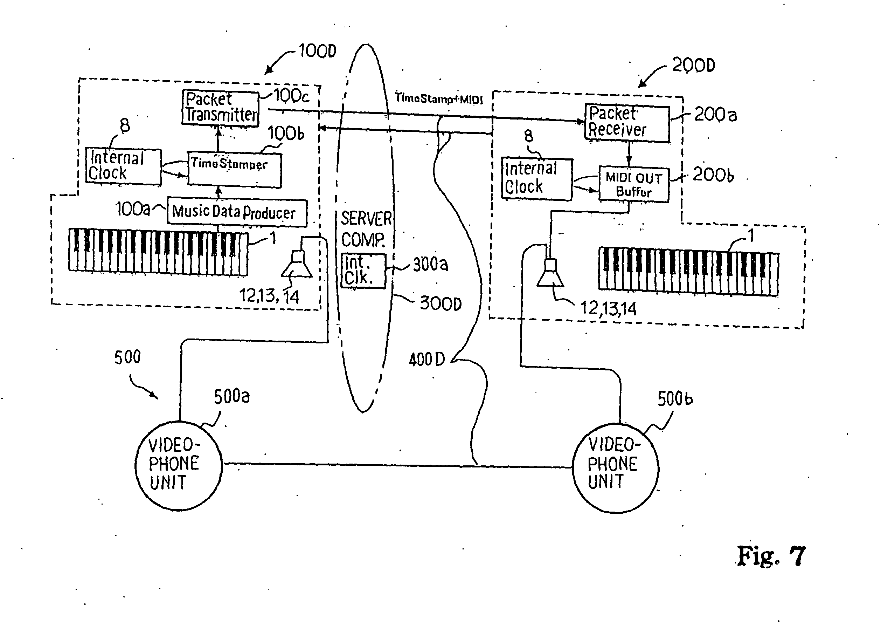

Still another music performance system embodying the present invention is illustrated in figure 7. The music performance system shown in figure 7 is different from the music performance system shown in figures 1 and 2 in a video-phone system 500. In detail, the music performance system comprises music stations 100D, 200D, ..., a server computer 300D, a communication network 400D and the video-phone system 500. The music stations 100D, 200D, ..., server computer 300D and communication network 400D are similar to those of the music stations 100, 200, ..., server computer 300 and communication network 400 except that the communication network 400D is available for a data transmission in the video-phone system 500. For this reason, description is focused on the video-phone unit 500, and components of music stations 100D, 200D,... and server computer 300D are labeled with references designating the corresponding components of music stations 100, 200, ... and server computer 300 without detailed description.

The video-phone system 500 includes video-phone units 500a, 500b, ...., and the video-phone units 500a, 500b, ... are connected to the communication network 400D. Each of the video-phone units 500a, 500b, ... includes a video camera, a microphone and a monitor display, and the sound system 14 is shared between the video-phone unit 500a or 500b and the electronic tone generator/ effectors 12/ 13. The video camera is directed to the tutor on a music station 100D or a student on associated one of the music station 200D, ...., and the scene on the music station 100D or 200D is converted to video data codes. The microphone is also directed to the tutor or student, and the voice is converted to voice data codes. The video data codes and voice data codes are transmitted through the communication network 400D, and the video data codes and voice data codes are converted to the scene on the monitor display and voice messages through the sound system 14. Thus, the tutor and students feel the others close to one another.

The computer program installed in the music station 100D, 200D, ... is same as that of the first embodiment, and no further description is hereinafter incorporated for the sake of simplicity.

As will be appreciated from the foregoing description on the embodiments, the internal clocks 8 for the time stamp are set up by the internal clock 300a or 8 without any disturbance of the performance. As a result, the original performance is perfectly reenacted on another music station.

Although particular embodiments of the present invention have been shown and described, it will be apparent to those skilled in the art that various changes and modifications may be made without departing from the scope of the present invention.

One of the music stations such as, for example, the tutor station 100 may serve as the server computer 300. In this instance, the server computer 300, which are independent of the music stations, is not incorporated in the music performance system.

Frequency demultipliers and counters may serve as the internal clocks 8. A wireless channel may form a part of the communication network 400. For example, the musical stations 100, 200, ... may be connected through the wireless handy-phone network.

The predetermined time period of ten seconds does not set any limit to the technical scope of the present invention. The predetermined time period is determined from the viewpoint that the time setting work is not to disturb the music data transmission and reception. Therefore, the predetermined time period may be shorter than or longer than ten seconds in other music performance systems of the present invention.

The electronic keyboard 1 does not set any limit to the technical scope of the present invention. Any sort of musical instrument is available for the music performance system in so far as the musical instrument is capable of generating tones without fingering thereon. In other words, any sort of musical instrument, which is not only fingered by a player but also responsive to pieces of music data transmitted from another music data source. A hybrid musical instrument such as, for example, mute pianos may be installed on the music stations. The mute piano is a combination between an acoustic piano and an electronic tone generating system. A hammer stopper is installed in the acoustic piano. While a player is fingering on the acoustic piano, the electronic system produces music data codes. If the hammer stopper is in a free position, the acoustic piano tones are produced in the acoustic piano. If, on the other hand, the hammer stopper is changed to a blocking position, the hammers rebound on the hammer stopper before the collision with the strings, and any piano tone is not produced in the acoustic piano. Instead, the electronic system produces the music data codes, and electronic tones are produced. The music data codes are packaged in packets, and the packets are transmitted to a musical instrument on another music station.

The musical instruments on the music stations do not set any limit on the technical scope of the present invention. The music data codes may be produced through a personal computer system. Similarly, the tones are produced through a sound system controlled by a personal computer system. Thus, the personal computer system can behave as similar to the musical instrument on the music station.

The computer program may be stored in a suitable information storage medium so as to be sold independently of the musical instrument. For this reason, the sequence of programmed instructions and information storage medium, in which the computer program is stored, are fallen within the technical scope of the present invention. The information storage medium is a flexible disk, a hard disk, a magneto-optical disk, CD-ROM, CD-R, CD-RW, DVD-ROM (Digital-Versatile-Disk ROM), DVD-RAM, DVD-RW, DVD+RW, a piece of magnet tape, a non-volatile memory card and a semiconductor mask ROM, by way of example. In case where the computer program is downloaded from a server computer, the memory system in the server computer is another example of the information storage medium.

A part of the computer program of the present invention may be realized by jobs in an operating system or jobs of another application program.

In case where the computer program of the present invention is stored in a memory on an add-in board, certain jobs may be carried out by a microprocessor on the add-in board. Other jobs may be carried out by the central processing unit of the computer system.

In the second embodiment, the time setting work, in which the internal clocks 8A of student stations 200, ... are set by the internal clock 8A of tutor station 100A, does not set any limit to the technical scope of the present invention. One of the student stations 200 may measure the standard time with the internal clock 8A. In this instance, the internal clocks 8A of other student stations and internal clock 8A of tutor station are set by the internal clock 8A of the student station 200.

The components of the music performance systems are correlated with claim languages as follows.

The music station 100 and music station 200 are corresponding to a "music station" and "another music station", respectively. The internal clock 300a or internal clock for time-setting work 8A serves as a "standard clock".

As to elements of the "music station", the keyboard 1 and music data producer 100a, which is realized by the central processing unit 5 and a part of the computer program, are corresponding to a "music data source". The automatic player piano 1C and music data producer 100a also serve as the "music data source". The internal clock 8 or 8A for the time stamp serves as an "internal clock", and the time stamper 100b is corresponding to a "time keeper". The packet transmitter module 100c and packet receiver module (not shown) serves as a "communication module". The internal clock 8 or 8A for the time setting work, central processing unit 5 and a part of the subroutine program for the time setting work as a whole constitute a "monitor", and the central processing unit 5 and a remaining part of the subroutine program for the time setting work serve as a "clock setter".

As to the elements of "another music station", the internal clock 8 or 8A for the time stamp serves as "another internal clock", and the electronic tone generator 12, effectors 13 and sound system 14 as a whole constitute a "tone generator". The automatic player 200c and automatic player piano 1C also serve as the "tone generator". The packet receiver module 200a and packet transmitter module (not shown) serves as a "communication module", and the MIDI OUT buffer 200b serves as a "data buffer". The internal clock 8 or 8A for the time setting work, central processing unit 5 and a part of the subroutine program for the time setting work as a whole constitute a "monitor", and the central processing unit 5 and a remaining part of the subroutine program for the time setting work serve as a "clock setter".

The server computer 300, 300C or 300D serves as a "server".

**Claims**

1. A music performance system for performing a tune produced at a remote place, comprising:

a communication network (100; 100A; 100C; 100D) for propagating at least pieces of music data and pieces of time data therethrough; a music station (100; 100A; 100C; 100D) connected to said communication network (100;

100A; 100C; 100D), and including a music data source (1, 100a; 1C, 100a) producing said pieces of music data expressing a performance of a tune, an internal clock (8; 8A) measuring a lapse of time, a time keeper (100b) connected to said music data source (1, 100a; 1C, 100a) and said internal clock (8; 8A), determining a time in said lapse of time at which each of said pieces of music data is produced and pairing said pieces of time data each expressing said time with said pieces of music data, respectively, and a communication module (100c) received with said pieces of music data respectively paired with said pieces of time data and putting said pieces of music data respectively paired with said pieces of time data onto said communication network (400; 400A; 400C; 400D); and another music station (200; 200A; 200C; 200D) connected to said communication network (100; 100A; 100C; 100D), and including another internal clock (8; 8A) measuring another lapse of time, a tone generator (12, 13, 14; 1C, 200c) producing tones respectively expressed by said pieces of music data, another communication module (200a) receiving said pieces of music data respectively paired with said pieces of time data from said communication network (100; 100A; 100C; 100D), and a data buffer (200b) connected to said another communication module (200a) for accumulating said pieces of music data respectively paired with said pieces of time data, comparing said time expressed by each of said pieces of time data with the time indicated by said another internal clock (8; 8A) and supplying the piece of music data paired with said each of said pieces of time data to said tone generator (12, 13, 14; 1C, 200c) when said time expressed by said each of said pieces of time data is consistent with said time indicated by said another internal clock (8; 8A),

**characterized by** further comprising

a standard clock (300a; 8A) measuring a standard time; and in that said music station (100; 100A; 100C; 100D) further includes a monitor (5, 8; 5, 8A) measuring a time period between two of said pieces of music data handled by said communication module (100c) and initiating a time setting work when said time period becomes equal to a predetermined time period, and

a clock setter (5) connected to said internal clock (8; 8A), said monitor (5, 8; 5, 8A) and said standard clock (300a; 8A) and setting said internal clock (8; 8A) by said standard clock (300a; 8A) when said monitor (5, 8; 5, 8A) determines to initiate said time setting work,

and in that

said another music station (200; 200A; 200C; 200D) further includes

another monitor (5, 8; 5, 8A) measuring a time period between the pieces of music data handled by said another communication module (200a) and initiating said time setting work when said time period becomes equal to said predetermined time period, and

another clock setter (5) connected to said another internal clock (8; 8A), said another monitor (5, 8; 5, 8A) and said standard clock (300a; 8A) and setting said another internal clock (8; 8A) by said standard clock (300a; 8A) when said another monitor (5, 8; 5, 8A) determines to initiate said time setting work.

2. The music performance system as set forth in claim 1, further comprising a server (300; 300C; 300D) connected to said communication network (100; 100C; 100D), relaying said pieces of music data respectively paired with said pieces of time data from said music station (100; 100C; 100D) to said another music station (200; 200C; 200D) and having said standard clock (300a).

3. The music performance system as set forth in claim 2, in which said server (300; 300C; 300D) is responsive to a request for transmitting said standard time transmitted from said music station (100; 100C; 100D) and said another music station (200; 200C; 200D) so as to transmit a piece of time data expressing said standard time to said music station (100; 100C; 100D) and said another music station (200; 200C; 200D).

4. The music performance system as set forth in claim 1, in which one of said music station (100A) and said another music station (200A) includes said standard clock (8A).

5. The music performance system as set forth in claim 4, in which said internal clock (8A) of said one of said music station (100A) and said another music station (200A) serves as said standard clock so that said monitor and said clock setter of said one of said music station (100A) and said another music station (200A) are deleted from said one of said music station (100A) and said another music station (200A).

6. The music performance system as set forth in claim 1, in which said another music station (200; 200D) further includes

another music data source producing other pieces of music data expressing another performance of a tune, and

another time keeper connected to said another music data source and said another internal clock (8), determining a time in said another lapse of time at which each of said other pieces of music data is produced and pairing other pieces of time data expressing said tine with said other pieces of music data, respectively so that said another communication module (200a) puts said other pieces of music data respectively paired with said other pieces of time data on said communication network (100; 100D), thereby transmitting said other pieces of music data respectively paired with said other pieces of time data to said music station (100; 100D),

and in which

said music station (100; 100D) further includes another tone generator producing said tones expressed by said other pieces of music data,

another data buffer connected between said communication module (100c) and said another tone generator for accumulating said other pieces of music data respectively paired with said other pieces of time data, comparing the time expressed by each of said other pieces of time data with the time indicated by said internal clock and supplying the piece of music data paired with said each of said other pieces of time data to said another tone generator when said time expressed by said each of said other pieces of time data is consistent with said time indicated by said internal clock.

7. The music performance system as set forth in claim 6, further comprising a server (300; 300D) connected to said communication network (100; 100D) and relaying said pieces of music data respectively paired with said pieces of time data and said other pieces of music data respectively paired with said other pieces of time data to said another music station (200; 200D) and said music station (100; 100D), respectively.

8. The music performance system as set forth in claim 7, in which said server (300; 300D) has said standard clock (300a) so as to transmit a piece of time data expressing said standard time to said music station (100; 100D) and said another music station (200; 200D) when said music station (100; 100D) and said another music station (200; 200D) transmits a request for transmitting said standard time to said server (300; 300D).

9. The music performance system as set forth in claim 1, in which said clock setter (5) and said another clock setter (5) transmit a request for transmitting said standard time to said standard clock (300a; 8A) so that said standard clock transmits a piece of time data expressing said standard time to said clock setter (5) and said another clock setter (5).

10. The music performance system as set forth in claim 9, in which said clock setter (5) and said another clock setter (5) respectively set said internal clock (8; 8A) and said another internal clock (8; 8A) on or back by a time difference Δt calculated as

$$\Delta t = (Ta + Tb)/2 - Ts$$

where Ta is a time at which said request is transmitted, Tb is a time at which said piece of time data expressing said standard time arrives and Ts is said standard time.

11. A music station connected to a communication network (400; 400A; 400C; 400D), and comprising:

a music data source (1, 100a; 1C, 100a) producing said pieces of music data expressing a performance of a tune;
an internal clock (8; 8A) measuring a lapse of time;
a time keeper (100b) connected to said music data source (1, 100a; 1C, 100a) and said internal clock (8; 8A), determining a time in said lapse of time at which each of said pieces of music data is produced and pairing said pieces of time data each expressing said time with said pieces of music data, respectively; and
a communication module (100c) receiving said pieces of music data respectively paired with said pieces of time data and putting said pieces of music data respectively paired with said pieces of time data onto said communication network (400; 400A; 400C; 400D);

**characterized by** further comprising
a monitor (5, 8; 5, 8A) measuring a time period between two of said pieces of music data handled by said communication module (100c) and initiating a time setting work when said time period becomes equal to a predetermined time period, and
a clock setter (5) connected to said internal clock (8; 8A), said monitor (5, 8; 5; 8A) and a standard clock (300a; 8A) for measuring a standard time and setting said internal clock (8; 8A) by said standard clock (300a; 8A) when said monitor (5, 8; 5, 8A) determines to initiate said time setting work.

12. The music station as set forth in claim 11, a server (300; 300C; 300D) is connected to said communication network (400; 400C; 400D) so as to relay said pieces of music data respectively paired with said pieces of time data to another music station (200; 200C; 200D).

13. The music station as set forth in claim 12, in which said server (300; 300C; 300D) has said standard clock (300a), and is responsive to a request for transmitting said standard time transmitted from said music station (100; 100C; 100D) so as to transmit a piece of time data expressing said standard time to said music station (100; 100C; 100D).

14. The music station as set forth in claim 11, further comprising
a tone generator producing tones expressed by other pieces of music data,
and
a data buffer connected between said communication module (100c) and said tone generator for accumulating said other pieces of music data respectively paired with said other pieces of time data, comparing the time expressed by each of said other pieces of time data with the time indicated by said internal clock (8; 8A) and supplying the piece of music data paired with said each of said other pieces of time data to said tone generator when said time expressed by said each of said other pieces of time data is consistent with said time indicated by said internal clock (8; 8A).

15. The music station as set forth in claim 11, in which said clock setter (5) transmits a request for transmitting said standard time to said standard clock (300a; 8A) so that said standard clock (300a; 8A) transmits a piece of time data expressing said standard time to said clock setter (5).

16. The music station as set forth in claim 15, in which said clock setter (5) sets said internal clock (8; 8A) on or back by a time difference Δt calculated as

$$\Delta t = (Ta + Tb)/2 - Ts$$

where Ta is a time at which said request is transmitted, Tb is a time at which said piece of time data expressing said standard time arrives and Ts is said standard time.

17. A music station connected to a communication network (400; 400A; 400C; 400D), comprising:

an internal clock (8; 8A) measuring a lapse of time;
a tone generator (12, 13, 14; 1C, 200c) producing tones respectively expressed by pieces of music data;
a communication module (200a) receiving said pieces of music data respectively paired with pieces of time data each expressing a time, at which associated one of said pieces of music data is produced, from said communication network (400; 400A; 400C; 400D); and

a data buffer (200b) connected to said communication module (200a) for accumulating said pieces of music data respectively paired with said pieces of time data, comparing said time expressed by each of said pieces of time data with the time indicated by said internal clock (8; 8A) and supplying the piece of music data paired with said each of said pieces of time data to said tone generator (12, 13, 14; 1C, 200c) when said time expressed by said each of said pieces of time data is consistent with said time indicated by said internal clock (8; 8A),

**characterized by** further comprising

a monitor (5, 8; 5, 8A) measuring a time period between two of said pieces of music data handled by said communication module (200a) and initiating a time setting work when said time period becomes equal to a predetermined time period, and

a clock setter (5) connected to said internal clock (8; 8A), said monitor (5, 8; 5, 8A) and said standard clock (300a; 8A) and setting said internal clock (8; 8A) by said standard clock (300a; 8A) when said monitor (5, 8; 5, 8A) determines to initiate said time setting work.

18. The music station as set forth in claim 17, a server (300; 300C; 300D) is connected to said communication network (400; 400C; 400D) so as to relay said pieces of music data respectively paired with said pieces of time data from another music station (100; 100C; 100D) to said music station (200; 200C; 200D).

19. The music station as set forth in claim 18, in which said server (300; 300C; 300D) has said standard clock (300a), and is responsive to a request for transmitting said standard time transmitted from said music station (200; 200C; 200D) so as to transmit a piece of time data expressing said standard time to said music station (200; 200C; 200D).

20. The music station as set forth in claim 17, in which said music station further includes

a music data source producing other pieces of music data expressing another performance of a tune, and

a time keeper connected to said music data source and said internal clock (8; 8A), determining a time in said lapse of time at which each of said other pieces of music data is produced and pairing other pieces of time data expressing said tine with said other pieces of music data, respectively so that said communication module (200a) puts said other pieces of music data respectively paired with said other pieces of time data onto said communication network (400; 400D), thereby transmit said other pieces of music data respectively paired with said other pieces of time data to another music station,

21. The music station as set forth in claim 17, in which said clock setter (5) transmits a request for transmitting said standard time to said standard clock (300a; 8A) so that said standard clock (300a; 8A) transmits a piece of time data expressing said standard time to said clock setter (5).

22. The music station as set forth in claim 21, in which said clock setter (5) sets said internal clock (8; 8A) on or back by a time difference $\Delta t$ calculated as

$$\Delta t = (Ta + Tb)/2 - Ts$$

where Ta is a time at which said request is transmitted, Tb is a time at which said piece of time data expressing said standard time arrives and Ts is said standard time.

**Patentansprüche**

1. Ein Musikaufführungssystem zum Aufführen einer Melodie, die an einem entfernten Ort erzeugt wurde, das Folgendes aufweist:

ein Kommunikationsnetzwerk (100, 100A, 100C, 100D) zum Verbreiten von wenigstens Stücken von Musikdaten und Stücken von Zeitdaten dahindurch, wobei

eine Musikstation (100, 100A, 100C, 100D), die mit dem Kommunikationsnetzwerk (100, 100A, 100C, 100D) verbunden ist und Folgendes aufweist

eine Musikdatenquelle (1,100a; 1C, 100a), die die Stücke von Musikdaten erzeugt, die die Aufführung einer Melodie wiedergeben,

eine interne Uhr (8; 8A) das Ablaufen der Zeit misst,

einen Zeitnehmer (100b), der mit der Musikdatenquelle (1, 100a; 1C, 100a) und der internen Uhr (8; 8A) verbunden ist und eine Zeit in dem Ablauf der Zeit bestimmt zu der jedes Stück von Musikdaten erzeugt ist und verbunden wird mit den Stücken von Zeitdaten, die jeweils entsprechend die Zeit mit dem Stück von Musikdaten wiedergibt,

ein Kommunikationsmodul (100c), das die Stücke von Musikdaten empfängt, die entsprechend mit den Stücken von Zeitdaten verbunden wurden und die Stücke von Musikdaten, die entsprechend mit den Stücken von Zeitdaten verbunden wurden, auf dem Kommunikationsnetzwerk (400,400A, 400C, 400D) ablegt, und eine weitere Musikstation (200; 200A; 200C; 200D), die mit dem Kommunikationsnetzwerk (400,400A, 400C, 400D) verbunden ist und Folgendes aufweist

eine weitere interne Uhr (8; 8A), die ein weiteres Ablaufen von Zeit misst,

einen Tongenerator (12, 13,14; 1C, 200c), der Töne produziert, die entsprechend von den Stücken von Musikdaten wiedergegeben werden, wobei

ein weiteres Kommunikationsmodul (200a) die Stükke von Musikdaten, die entsprechend mit den Stükken von Zeitdaten verbunden wurden, von dem Kommunikationsnetzwerk (100,100A, 100C, 100D) empfängt, und

einen Datenpuffer (200b), der mit dem weiteren Kommunikationsmodul (200a) verbunden ist, zum Sammeln der Stücke von Musikdaten, die entsprechend mit den Stükken von Zeitdaten verbunden wurden, zum Vergleichen der Zeit, die durch jedes dieser Stücke von Zeitdaten wiedergegeben wird mit der Zeit, die durch die weitere interne Uhr (8; 8A) angezeigt wird und zum Liefern der Stücke von Musikdaten, die mit jedem der Stücke von Zeitdaten verbunden wurde zu dem Tongenerator (12, 13,14; 1C, 200c), wenn die Zeit die durch jedes dieser Stükke von Zeitdaten wiedergegeben wird mit der Zeit, die durch die weitere interne Uhr (8; 8A) angezeigt wird, übereinstimmt, **dadurch gekennzeichnet, dass** es ferner

eine Standarduhr (300 a; 8 A) aufweist, die eine Standardzeit misst und **dadurch**, dass

die Musikstation (100; 100A; 100C; 100D) ferner einen Monitor (5, 8; 5, 8A) aufweist, der eine Zeitperiode zwischen zwei Stücken von Musikdaten misst, die durch das Kommunikationsmodul (100c) behandelt wurden und der eine Zeitstellarbeit initialisiert, wenn die Zeitperiode gleich einer vorbestimmten Zeitperiode wird, und wobei

ein Uhrsteller (5), der mit der internen Uhr (8; 8A), dem Monitor (5, 8; 5, 8) und der Standarduhr (300 a; 8A) verbunden ist und die interne Uhr (8; 8A) über die Standarduhr (300a; 8A) stellt, wenn der Monitor (5, 8; 5, 8A) das Initialisieren der Zeitstellarbeit bestimmt und **dadurch**, dass

die weitere Musikstation (200; 200A; 200C; 200D) ferner einen

weiteren Monitor (5, 8; 5, 8A) aufweist, der eine Zeitperiode zwischen den Stücken von Musikdaten misst, die durch das weitere Kommunikationsmodul (200a) behandelt wurden und der die Zeitstellarbeit initialisiert, wenn die Zeitperiode gleich der vorbestimmten Zeitperiode wird, und

einen weiteren Uhrsteller (5), der mit der weiteren internen Uhr (8; 8A), dem weiteren Monitor (5, 8; 5, 8A) und der Standarduhr (300 a; 8A) verbunden ist und die interne Uhr (8; 8A) über die Standarduhr (300a; 8A) stellt, wenn der Monitor (5, 8; 5, 8A) das Initialisieren der Zeitstellarbeit bestimmt.

2. Das Musikaufführungssystem gemäß Anspruch 1, das ferner einen Server (300; 300C; 300D) aufweist, der mit dem Kommunikationsnetzwerk (100; 100C; 100D) verbunden ist und die Stücke von Musikdaten, die entsprechend mit den Stücken von Zeitdaten verbunden wurden, von der Musikstation (100; 100C; 100D) an die weitere Musikstation (200; 200C; 200D) weiterleitet und der die Standarduhr (300a) aufweist.

3. Das Musikaufführungssystem gemäß Anspruch 2, in dem der Server (300; 300C; 300D) ansprechend auf eine Anfrage zum Übermitteln der Standardzeit ist, die von der Musikstation (100; 100C; 100D) und der weiteren Musikstation (200; 200C; 200D) übermittelt wurde, um ein Stück von Zeitdaten an die Musikstation (100; 100C; 100D) und die weitere Musikstation (200; 200C; 200D) zu übermitteln, das die Standardzeit wiedergibt.

4. Das Musikaufführungssystem gemäß Anspruch 1 in dem entweder die Musikstation (100A) oder die weitere Musikstation (200A) die Standarduhr (8A) beinhaltet.

5. Das Musikaufführungssystem gemäß Anspruch 4 in dem die interne Uhr (8A) von entweder der Musikstation (100A) oder der weiteren Musikstation (200A) als die Standarduhr fungiert, so dass der Monitor und der Uhrsteller von entweder der Musikstation (100A) oder der weiteren Musikstation (200A) entfernt werden von entweder der Musikstation (100A) oder der weiteren Musikstation (200A).

6. Das Musikaufführungssystem gemäß Anspruch 1 in der die weitere Musikstation (200; 200D) ferner eine weitere Musikdatenquelle beinhaltet, die andere Stücke von Musikdaten erzeugt, die eine weitere Aufführung einer Melodie wiedergibt, und einen weiteren Zeitnehmer umfasst, der mit der weiteren Musikdatenquelle und der weiteren internen Uhr (8) verbunden ist und eine Zeit in dem weiteren Ablauf in der Zeit bestimmt, zu der jedes von den anderen Stücken von Musikdaten erzeugt ist und mit den anderen Stücken von Zeitdaten, die die Zeit mit den anderen Stücken von Musikdaten ausdrückt, entsprechend verbunden wird, so dass das andere Kommunikationsmodul (200a) die anderen Stücke von Musikdaten, die entsprechend mit den anderen Stücken von Zeitdaten verbunden wurden, auf dem Kommunikationsnetzwerk (100; 100D) ablegt und dabei die anderen Stücke von Musikdaten, die entsprechend mit den anderen Stücken von Zeitdaten verbunden wurden, an die Musikstation (100; 100D) übermittelt und in der

die Musikstation (100; 100D) ferner

einen weiteren Tongenerator aufweist, der die Töne erzeugt, die durch die anderen Stücke von Musikdaten wiedergegeben werden,

einen weiteren Datenpuffer aufweist, der zwischen das Kommunikationsmodul (100c) und den weiteren Tongenerator geschaltet ist und die Stücke von Musikdaten sammelt, die entsprechend mit den Stücken von Zeitdaten verbunden wurden und die Zeit, die durch jedes dieser anderen Stücke von Zeitdaten wiedergegeben wird mit der Zeit vergleicht, die durch die interne Uhr angezeigt wird und das Stück von Musikdaten, das mit jedem der anderen Stücke von Zeitdaten verbunden wurde zu dem weiteren Tongenerator liefert, wenn die Zeit, die durch jedes dieser anderen Stücke von Zeitdaten wiedergegeben wird, mit der Zeit, die durch die weitere interne Uhr (8; 8A) angezeigt wird, übereinstimmt.

7. Das Musikaufführungssystem gemäß Anspruch 6, das ferner einen Server (300; 300D) aufweist, der mit dem Kommunikationsnetzwerk (100; 100D) verbunden ist und die Stücke von Musikdaten, die entsprechend mit den Stücken von Zeitdaten verbunden wurden und die anderen Stücke von Musikdaten, die entsprechend mit den anderen Stücken von Zeitdaten verbunden wurden, an die weitere Musikstation (200; 200D) und an die Musikstation (100; 100D) weiterleitet.

8. Das Musikaufführungssystem gemäß Anspruch 7, in welchem der Server (300; 300D) die Standarduhr (300a) aufweist, um ein Stück von Zeitdaten, das die Standardzeit wiedergibt an die Musikstation (100; 100D) und an die weitere Musikstation (200; 200D) zu übermitteln, wenn die Musikstation (100; 100D) und die weitere Musikstation (200; 200D) eine Anfrage zur Übermittlung der Standardzeit auf den Server (300; 300D) übermitteln.

9. Das Musikaufführungssystem gemäß Anspruch 1, in welchem der Uhrsteller (5) und der weitere Uhrsteller (5) eine Anfrage zur Übermittlung der Standardzeit an die Standarduhr (300a; 8A) übermitteln, so dass die Standarduhr ein Stück der Zeitdaten, die die Standardzeit wiedergeben, zu dem Uhrsteller (5) und zu dem weiteren Uhrsteller (5) übermittelt.

10. Das Musikaufführungssystem gemäß Anspruch 9, in welchem der Uhrsteller (5) und der weitere Uhrsteller (5) entsprechend die interne Uhr (8; 8A) und die weitere interne Uhr (8; 8A) auf oder nach einer Zeitdifferenz Δt stellen, die sich zu

$$\Delta t = (Ta + Tb) / 2 - Ts$$

berechnet, wobei Ta eine Zeit ist, zu der die Anfrage übermittelt ist, Tb eine Zeit ist, zu der das Stück von Zeitdaten, die die Standardzeit wieder geben ankommt und Ts die Standardzeit ist.

11. Eine Musikstation, die mit dem Kommunikationsnetzwerk (400; 400A; 400C; 400D) verbunden ist und die Folgendes aufweist:

eine Musikdatenquelle (1,100a; 1C, 100a), die die Stücke von Musikdaten erzeugt, die die Aufführung einer Melodie wiedergeben, eine interne Uhr (8; 8A), die den Ablauf der Zeit misst, und

einen Zeitnehmer (100b), der mit der Musikdatenquelle (1,100a; 1C, 100a) und der internen Uhr (8; 8A) verbunden ist und eine Zeit in dem Ablauf der Zeit bestimmt zu der jedes Stück von Musikdaten erzeugt ist und verbunden wird mit den Stücken von Zeitdaten, die jeweils entsprechend die Zeit mit dem Stück von Musikdaten wiedergibt, und

ein Kommunikationsmodul (100c), das die Stücke von Musikdaten empfängt, die entsprechend mit den Stücken von Zeitdaten verbunden wurden und die Stücke von Musikdaten, die entsprechend mit den Stücken von Zeitdaten verbunden wurden, auf dem Kommunikationsnetzwerk (400,400A, 400C, 400D) ablegt, **dadurch gekennzeichnet, dass** es ferner

einen Monitor (5, 8; 5, 8A) aufweist, der eine Zeitperiode zwischen den zwei Stücken von Musikdaten misst, die durch das Kommunikationsmodul (100c) behandelt wurden und der eine Zeitstellarbeit initialisiert, wenn die Zeitperiode gleich einer vorbestimmten Zeitperiode wird, und

einen Uhrsteller (5) aufweist, der mit der internen Uhr (8; 8A), dem Monitor (5, 8; 5, 8A) und der Standarduhr (300a; 8A) verbunden ist und die interne Uhr (8;

8A) über die Standarduhr (300a; 8A) stellt, wenn der Monitor (5, 8; 5, 8A) das Initialisieren der Zeitstellarbeit bestimmt.

12. Die Musikstation gemäß Anspruch 11, die einen Server (300; 300D) aufweist, der mit dem Kommunikationsnetzwerk (400; 400C; 400D) verbunden ist, um die Stücke von Musikdaten, die entsprechend mit den Stücken von Zeitdaten verbunden wurden an die weitere Musikstation (200; 200 C; 200D) weiterzuleiten.

13. Die Musikstation gemäß Anspruch 12, in welcher der Server (300; 300C; 300D) die Standarduhr (300a) aufweist und ansprechend ist auf eine Anfrage zur Übermittlung der Standardzeit, die von der Musikstation (100; 100C; 100D) übermittelt wurde, um ein Stück von Zeitdaten, die die Standardzeit wiedergeben, zu der Musikstation (100; 100C; 100D) zu übermitteln.

14. Die Musikstation gemäß Anspruch 11, weist ferner einen Tongenerator auf, der Töne erzeugt, die durch andere Stücke von Musikdaten wiedergegeben werden, einen Datenpuffer, der zwischen das Kommunikationsmodul (100c) und den weiteren Tongenerator geschaltet ist und die Stücke von Musikdaten sammelt, die entsprechend mit den Stücken von Zeitdaten verbunden wurden und die Zeit, die durch jedes dieser anderen Stücke von Zeitdaten wiedergegeben wird mit der Zeit vergleicht, die durch die interne Uhr angezeigt wird und das Stück von Musikdaten, das mit jedem der anderen Stücke von Zeitdaten verbunden wurde zu dem weiteren Tongenerator liefert, wenn die Zeit, die durch jedes dieser anderen Stücke von Zeitdaten wiedergegeben wird, mit der Zeit, die durch die weitere interne Uhr (8; 8A) angezeigt wird, übereinstimmt.

15. Die Musikstation gemäß Anspruch 11 in welcher der Uhrsteller (5) eine Anfrage zur Übermittlung der Standardzeit auf die Standarduhr (300a; 8A) übermittelt, so dass die Standarduhr (300; 8A) ein Stück der Zeitdaten, die die Standardzeit wiedergeben, zu dem Uhrsteller (5) übermittelt.

16. Die Musikstation gemäß Anspruch 15 in welcher der Uhrsetzer (5) die interne Uhr (8; 8A) auf oder nach einer Zeitdifferenz Δt setzt, die sich zu

$$\Delta t = (Ta + Tb) / 2 - Ts$$

berechnet, wobei Ta eine Zeit ist, zu der die Anfrage übermittelt ist, Tb eine Zeit ist, zu der das Stück von Zeitdaten, die die Standardzeit wiedergeben ankommt und Ts die Standardzeit ist.

17. Eine Musikstation, die mit dem Kommunikationsnetzwerk (400; 400A; 400C; 400D) verbunden ist und die Folgendes aufweist:

eine interne Uhr (8; 8A), die den Ablauf der Zeit misst, einen Tongenerator, der Töne erzeugt, die durch Stücke von Musikdaten entsprechend wiedergegeben werden, ein Kommunikationsmodul (200a), das die Stücke von Musikdaten von dem Kommunikationsnetzwerk (400; 400 A; 400 C; 400 D) empfängt, die entsprechend mit den Stücken von Zeitdaten, die jeweils eine Zeit wiedergeben verbunden sind, zu der zugeordnet eines der Stücke von Musikdaten erzeugt wird, wobei ein Datenpuffer (200b), der mit dem Kommunikationsmodul (200a) verbunden ist, die Stücke von Musikdaten sammelt, die entsprechend mit den Stücken von Zeitdaten verbunden wurden, die Zeit, die durch jedes dieser Stücke von Zeitdaten wiedergegeben wird mit der Zeit vergleicht, die durch die interne Uhr (8; 8A) angezeigt wird und die Stücke von Musikdaten, die mit jedem der Stücke von Zeitdaten verbunden wurde zu dem Tongenerator (12, 13,14; 1C, 200c) liefert, wenn die Zeit die durch jedes dieser Stücke von Zeitdaten wiedergegeben wird mit der Zeit, die durch die interne Uhr (8; 8A) angezeigt wird, übereinstimmt, **dadurch gekennzeichnet, dass** es ferner einen Monitor (5, 8; 5, 8A) aufweist, der eine Zeitperiode zwischen den zwei Stücken von Musikdaten misst, die durch das Kommunikationsmodul (200a) behandelt wurden und der eine Zeitstellarbeit initialisiert, wenn die Zeitperiode gleich einer vorbestimmten Zeitperiode wird, und wobei ein Uhrsteller (5), der mit der internen Uhr (8; 8A), dem Monitor (5, 8; 5, 8) und der Standarduhr (300a; 8A) verbunden ist, die interne Uhr (8; 8A) über die Standarduhr (300a; 8A) stellt, wenn der Monitor (5, 8; 5, 8A) das Initialisieren der Zeitstellarbeit bestimmt.

18. Die Musikstation gemäß Anspruch 17, die einen Server (300; 300C; 300D) aufweist, der mit dem Kommunikationsnetzwerk (400; 400 C; 400D) verbunden ist, um die Stücke von Musikdaten, die entsprechend mit den Stücken von Zeitdaten verbunden wurden von der weiteren Musikstation (100; 100 C; 100D) zu der Musikstation (200; 200 C; 200 D) weiterzuleiten.

19. Die Musikstation gemäß Anspruch 18, in welcher der Server (300; 300 C; 300D) die Standarduhr (300a) aufweist und ansprechend ist auf eine Anfrage zur Übermittlung der Standardzeit, die von der Musikstation (200; 200C; 200D) übermittelt wurde, um ein Stück von Zeitdaten, die die Standardzeit wiedergeben, zu der Musikstation (200; 200C; 200D) zu übermitteln.

20. Die Musikstation gemäß Anspruch 17 in welcher die Musikstation ferner

eine Musikdatenquelle aufweist, die andere Stücke von Musikdaten erzeugt, die eine weitere Aufführung einer Melodie wiedergeben, und wobei

ein Zeitnehmer, der mit der Musikdatenquelle und der internen Uhr (8; 8A) verbunden ist, eine Zeit in dem Ablauf der Zeit bestimmt, zu dem jedes von den anderen Stücken von Musikdaten erzeugt ist und mit den anderen Stücken von Zeitdaten, die die Zeit mit den anderen Stükken von Musikdaten ausdrückt, entsprechend verbunden wird, so dass das Kommunikationsmodul (200a) die anderen Stücke von Musikdaten, die entsprechend mit den anderen Stücken von Zeitdaten verbunden wurden, auf dem Kommunikationsnetzwerk (400; 400D) ablegt und dabei die anderen Stücke von Musikdaten, die entsprechend mit den anderen Stücken von Zeitdaten verbunden wurden, an eine weitere Musikstation übermittelt.

21. Die Musikstation gemäß Anspruch 17 in welcher der Uhrsteller (5) eine Anfrage zur Übermittlung der Standardzeit auf die Standarduhr (300a; 8A) übermittelt, so dass die Standarduhr (300) ein Stück der Zeitdaten, die die Standardzeit wiedergeben, zu dem Uhrsteller (5) übermittelt.

22. Die Musikstation gemäß Anspruch 21, in welcher der Uhrsteller (5) die interne Uhr (8; 8A) auf oder nach einer Zeitdifferenz Δ t stellt, die sich zu

$$\Delta t = (Ta + Tb) / 2 - Ts$$

berechnet, wobei Ta eine Zeit ist, zu der die Anfrage übermittelt ist, Tb eine Zeit ist, zu der das Stück von Zeitdaten, die die Standardzeit wieder geben ankommt und Ts die Standardzeit ist.

**Revendications**

1. Système pour jouer de la musique, pour exécuter un morceau de musique produit au niveau d'un emplacement distant, comprenant :

un réseau de communication (100 ; 100A ; 100C ; 100D) pour propager au moins des éléments de données de musique et des éléments de données temporelles ;
une station de musique (100 ; 100A ; 100C ; 100D) connectée au réseau de communication (100 ; 100A ; 100C ; 100D), et comprenant
une source de données de musique (1, 100a ; 1C, 100a) produisant les éléments de données de musique exprimant l'exécution d'un morceau de musique,
une horloge interne (8 ; 8A) mesurant un intervalle de temps,

un dispositif gardien du temps (100b) connecté à la source de données de musique (1, 100a ; 1C, 100a) et à l'horloge interne (8 ; 8A), déterminant un instant dans ledit intervalle de temps où chacun des éléments de données de musique est produit et associant les éléments de données temporelles dont chacun exprime ledit instant aux éléments de données de musique, respectivement, et
un module de communication (100c) reçu avec les éléments de données de musique associés respectivement aux éléments de données temporelles et mettant les éléments de données de musique associés respectivement aux éléments de données temporelles sur le réseau de communication (400 ; 400A ; 400C ; 400D) ; et
une autre station de musique (200 ; 200A ; 200C ; 200D) connectée au réseau de communication (100 ; 100A ; 100C ; 100D), et comprenant
une autre horloge interne (8 ; 8A) mesurant un autre intervalle de temps,
un générateur de sons (12, 13, 14 ; 1C, 200c) produisant des sons respectivement exprimés par les éléments de données de musique,
un autre module de communication (200a) recevant les éléments de données de musique respectivement associés aux éléments de données temporelles à partir du réseau de communication (100 ; 100A ; 100C ; 100D), et
un tampon de données (200b) connecté à l'autre module de communication (200a) pour accumuler les éléments de données de musique respectivement associés aux éléments de données temporelles, comparer le temps exprimé par chacun des éléments de données temporelles au temps indiqué par l'autre horloge interne (8 ; 8A) et fournir l'élément de données de musique associé à chacun des éléments de données temporelles au générateur de sons (12, 13, 14 ; 1C, 200c) lorsque le temps exprimé par chacun des éléments de données temporelles est en accord avec le temps indiqué par l'autre horloge interne (8 ; 8A),
**caractérisé en ce qu'**il comprend en outre
une horloge standard (300a ; 8A) mesurant un temps standard ;
et **en ce que**
la station de musique (100 ; 100A ; 100C ; 100D) comprend en outre
un dispositif de surveillance (5, 8 ; 5, 8A) mesurant un intervalle de temps entre deux des éléments de données de musique manipulés par le module de communication (100c) et lançant un travail de réglage de temps lorsque ledit intervalle de temps devient égal à un intervalle de temps prédéterminé, et
un dispositif de réglage d'horloge (5) connecté à l'horloge interne (8 ; 8A), au dispositif de surveillance (5, 8 ; 5, 8A) et à l'horloge standard (300a ; 8A) et réglant l'horloge interne (8 ; 8A) par l'horloge standard (300a ; 8A) lorsque le dispositif de surveillance (5, 8 ; 5, 8A) détermine qu'il faut lancer le travail de réglage de temps, et **en ce que**

l'autre station de musique (200 ; 200A ; 200C ; 200D) comprend en outre

un autre dispositif de surveillance (5, 8 ; 5, 8A) mesurant un intervalle de temps entre les éléments de données de musique manipulés par l'autre module de communication (200a) et lançant le travail réglage de temps lorsque ledit intervalle de temps devient égal à l'intervalle de temps prédéterminé ; et

un autre dispositif de réglage d'horloge (5) connecté à l'autre horloge interne (8 ; 8A), à l'autre dispositif de surveillance (5, 8 ; 5, 8A) et à l'horloge standard (300a ; 8A) et réglant l'autre horloge interne (8 ; 8A) par l'horloge standard (300a ; 8A) lorsque l'autre dispositif de surveillance (5, 8 ; 5, 8A) détermine qu'il faut lancer le travail de réglage de temps.

2. Système pour jouer de la musique selon la revendication 1, comprenant en outre un serveur (300 ; 300C ; 300D) connecté au réseau de communication (100 ; 100C ; 100D), relayant les éléments de données de musique respectivement associés aux éléments de données temporelles provenant de la station de musique (100 ; 100C ; 100D) vers une autre station de musique (200 ; 200C ; 200D) et comportant ladite horloge standard (300a).

3. Système pour jouer de la musique selon la revendication 2, dans lequel le serveur (300 ; 300C ; 300D) est sensible à une requête de transmission du temps standard transmise par la station de musique (100 ; 100C ; 100D) et l'autre station de musique (200 ; 200C ; 200D) afin de transmettre un élément de données temporelles exprimant le temps standard à la station de musique (100 ; 100C ; 100D) et à l'autre station de musique (200 ; 200C ; 200D).

4. Système pour jouer de la musique selon la revendication 1, dans lequel l'une de la station de musique (100A) et de l'autre station de musique (200A) comprend l'horloge standard (8A).

5. Système pour jouer de la musique selon la revendication 4, dans lequel l'horloge interne (8A) de ladite une de la station de musique (100A) et de l'autre station de musique (200A) sert d'horloge standard afin que le dispositif de surveillance et le dispositif de réglage d'horloge de ladite une de la station de musique (100A) et de l'autre station de musique (200A) soient supprimés de ladite une de la station de musique (100A) et de l'autre station de musique (200A).

6. Système pour jouer de la musique selon la revendication 1, dans lequel l'autre station de musique (200 ; 200D) comprend en outre
une autre source de données de musique produisant d'autres éléments de données de musique exprimant une autre exécution d'un morceau de musique, et
un autre dispositif gardien du temps connecté à l'autre source de données de musique et à l'autre horloge interne (8), déterminant un instant dans l'autre intervalle de temps ou chacun des autres éléments de données de musique est produit et associant d'autres éléments de données temporelles exprimant ledit instant à d'autres éléments de musique, respectivement, afin que l'autre module de communication (200a) mette les autres éléments de données de musique respectivement associés aux autres éléments de données temporelles sur le réseau de communication (100 ; 100D), transmettant ainsi les autres éléments de données de musique respectivement associés aux autres éléments de données temporelles à la station de musique (100 ; 100D),
et dans lequel
la station de musique (100 ; 100D) comprend en outre
un autre générateur de sons produisant les sons exprimés par les autres éléments de données de musique,
un autre tampon de données connecté entre le module de communication (100c) et l'autre générateur de sons pour accumuler les autres éléments de données de musique respectivement associés aux autres éléments de données temporelles, comparer le temps exprimé par chacun des autres éléments de données temporelles au temps indiqué par l'horloge interne et fournir l'élément de données de musique associé à chacun des autres éléments de données temporelles à l'autre générateur de sons lorsque le temps exprimé par chacun des autres éléments de données temporelles est en accord avec le temps indiqué par l'horloge interne.

7. Système pour jouer de la musique selon la revendication 6, comprenant en outre un serveur (300 ; 300D) connecté au réseau de communication (100 ; 100D) et relayant les éléments de données de musique respectivement associés aux éléments de données temporelles et aux autres éléments de données de musique respectivement associés aux autres éléments de données temporelles vers l'autre station de musique (200 ; 200D) et la station de musique (100 ; 100D), respectivement.

8. Système pour jouer de la musique selon la revendication 7, dans lequel le serveur (300 ; 300D) comporte ladite horloge standard (300a) de façon à transmettre un élément de données temporelles exprimant le temps standard à la station de musique (100 ; 100D) et à l'autre station de musique (200 ; 200D) lorsque la station de musique (100 ; 100D) et l'autre station de musique (200 ; 200D) transmettent une requête de transmission du temps standard au serveur (300 ; 300D).

9. Système pour jouer de la musique selon la revendication 1, dans lequel le dispositif de réglage d'horloge (5) et l'autre dispositif de réglage d'horloge (5) transmettent une requête de transmission du temps standard à l'horloge standard (300a ; 8A) afin que l'horloge standard transmette un élément de données temporelles exprimant le temps standard au dispositif de réglage d'horloge (5) et à l'autre dispositif de réglage d'horloge (5).

10. Système pour jouer de la musique selon la revendication 9, dans lequel le dispositif de réglage d'horloge (5) et l'autre dispositif de réglage d'horloge (5) règlent respectivement l'horloge interne (8 ; 8A) et l'autre horloge interne (8 ; 8A) en avant ou en arrière d'une différence de temps $\Delta t$ calculée de la façon suivante :

$$\Delta t = (Ta + Tb) / 2 - Ts$$

où Ta est le temps auquel la requête est transmise, Tb est le temps auquel l'élément de données temporelles exprimant le temps standard arrive et Ts est le temps standard.

11. Station de musique connectée à un réseau de communication (400 ; 400A ; 400C ; 400D), et comprenant :

une source de données de musique (1, 100a ; 1C, 100a) produisant les éléments de données de musique exprimant l'exécution d'un morceau de musique ;
une horloge interne (8 ; 8A) mesurant un intervalle de temps ;
un dispositif gardien du temps (100b) connecté à la source de données de musique (1, 100a ; 1C, 100a) et à l'horloge interne (8 ; 8A), déterminant l'instant dans ledit intervalle de temps où chacun des éléments de données de musique est produit et associant les éléments de données temporelles exprimant chacun ledit instant aux éléments de données de musique, respectivement ; et
un module de communication (100c) recevant les éléments de données de musique respectivement associés aux éléments de données temporelles et mettant lesdits éléments de données de musique respectivement associés aux éléments de données temporelles sur le réseau de communication (400 ; 400A ; 400C ; 400D) ; **caractérisée en ce qu'**elle comprend en outre un dispositif de surveillance (5, 8 ; 5, 8A) mesurant un intervalle de temps entre deux des éléments de données de musique manipulés par le module de communication (100c) et lançant un travail de réglage de temps lorsque l'intervalle de temps devient égal à un intervalle de temps prédéterminé, et
un dispositif de réglage d'horloge (5) connecté à l'horloge interne (8 ; 8A), au dispositif de surveillance (5, 8 ; 5, 8A) et à l'horloge standard (300a ; 8A) pour mesurer un temps standard et régler l'horloge interne (8 ; 8A) par l'horloge standard (300a ; 8A) lorsque le dispositif de surveillance (5, 8 ; 5, 8A) détermine qu'il faut lancer le travail de réglage de temps.

12. Station de musique selon la revendication 11, un serveur (300 ; 300C ; 300D) étant connecté au réseau de communication (400 ; 400C ; 400D) de façon à relayer les éléments de données de musique respectivement associés aux éléments de données temporelles vers une autre station de musique (200 ; 200C ; 200D).

13. Station de musique selon la revendication 12, dans laquelle le serveur (300 ; 300C ; 300D) comporte l'horloge standard (300a), et est sensible à une requête de transmission du temps standard transmise par la station de musique (100 ; 100C ; 100D) afin de transmettre un élément de données temporelles exprimant le temps standard à la station de musique (100 ; 100C ; 100D).

14. Station de musique selon la revendication 11, comprenant en outre
un générateur de sons produisant des sons exprimés par d'autres éléments de données de musique, et
un tampon de données connecté entre le module de communication (100c) et le générateur de sons pour accumuler les autres éléments de données de musique respectivement associés aux autres éléments de données temporelles, comparer le temps exprimé par chacun des autres éléments de données temporelles au temps indiqué par l'horloge interne (8 ; 8A) et fournir l'élément de données de musique associé à chacun des autres éléments de données temporelles au générateur de sons lorsque le temps exprimé par chacun des autres éléments de données temporelles est en accord avec le temps indiqué par l'horloge interne (8 ; 8A).

**15.** Station de musique selon la revendication 11, dans laquelle le dispositif de réglage d'horloge (5) transmet une requête de transmission du temps standard à l'horloge standard (300a ; 8A) afin que l'horloge standard (300a ; 8A) transmette un élément de données temporelles exprimant le temps standard au dispositif de réglage d'horloge (5).

**16.** Station de musique selon la revendication 15, dans laquelle le dispositif de réglage d'horloge (5) règle l'horloge interne (8 ; 8A) en avant ou en arrière d'une différence temporelle Δt calculée de la façon suivante :

$$\Delta t = (Ta + Tb)/2 - Ts$$

où Ta est un temps auquel la requête est transmise, Tb est un temps auquel l'élément de données temporelles exprimant le temps standard arrive et Ts est le temps standard.

**17.** Station de musique connectée à un réseau de communication (400 ; 400A ; 400C ; 400D), comprenant :

une horloge interne (8 ; 8A) mesurant un intervalle de temps ;
un générateur de sons (12, 13, 14 ; 1C, 200c) produisant des sons respectivement exprimés par des éléments de données de musique ;
un module de communication (200a) recevant les éléments de données de musique respectivement associés à des éléments de données temporelles exprimant chacun un temps, auquel un élément associé des éléments de données de musique est produit, à partir du réseau de communication (400 ; 400A ; 400C ; 400D) ; et
un tampon de données (200b) connecté au module de communication (200a) pour accumuler les éléments de données de musique respectivement associés aux éléments de données temporelles, comparer le temps exprimé par chacun des éléments de données temporelles au temps indiqué par l'horloge interne (8 ; 8A) et fournir l'élément de données de musique associé à chacun des éléments de données temporelles au générateur de sons (12, 13, 14 ; 1C, 200c) lorsque le temps exprimé par chacun des éléments de données temporelles est en accord avec le temps indiqué par l'horloge interne (8 ; 8A),
**caractérisée en ce qu'**elle comprend en outre un dispositif de surveillance (5, 8 ; 5, 8A) mesurant un intervalle de temps entre deux des éléments de données de musique manipulés par le module de communication (200a) et lançant un travail de réglage de temps lorsque l'intervalle de temps devient égal à un intervalle de temps prédéterminé, et
un dispositif de réglage d'horloge (5) connecté à l'horloge interne (8 ; 8A), au dispositif de surveillance (5, 8 ; 5, 8A) et à l'horloge standard (300a ; 8A) et réglant l'horloge interne (8 ; 8A) par l'horloge standard (300a ; 8A) lorsque le dispositif de surveillance (5, 8 ; 5, 8A) détermine qu'il faut lancer le travail de réglage de temps.

**18.** Station de musique selon la revendication 17, un serveur (300 ; 300C ; 300D) étant connecté au réseau de communication (400 ; 400C ; 400D) de façon à relayer les éléments de données de musique respectivement associés aux éléments de données temporelles provenant d'une autre station de musique (100 ; 100C ; 100D) vers la station de musique (200 ; 200C ; 200D).

**19.** Station de musique selon la revendication 18, dans laquelle le serveur (300 ; 300C ; 300D) comporte l'horloge standard (300a) et est sensible à une requête de transmission du temps standard transmise par la station de musique (200 ; 200C ; 200D) de façon à transmettre un élément de données temporelles exprimant le temps standard à la station de musique (200 ; 200C ; 200D).

**20.** Station de musique selon la revendication 17, dans laquelle la station de musique comprend en outre une source de données de musique produisant d'autres éléments de données de musique exprimant une autre exécution d'un morceau de musique, et
un dispositif gardien du temps connecté à la source de données de musique et à l'horloge interne (8 ; 8A), déterminant un instant dans ledit intervalle de temps auquel chacun des autres éléments de données de musique est produit et associant d'autres éléments de données temporelles exprimant ledit instant à d'autres éléments de données de musique, respectivement, afin que le module de communication (200a) mette les autres éléments de données de musique respectivement associés aux autres éléments de données temporelles sur le réseau de communication (400 ; 400D), transmettant ainsi les autres éléments de données de musique respectivement associés aux autres éléments de données temporelles à une autre station de musique.

**21.** Station de musique selon la revendication 17, dans laquelle le dispositif de réglage d'horloge (5) transmet une requête de transmission du temps standard à l'horloge standard (300a ; 8A) afin que l'horloge standard (300a ; 8A) transmette un élément de données temporelles exprimant le temps standard au dispositif de réglage d'horloge (5).

**22.** Station de musique selon la revendication 21, dans laquelle le dispositif de réglage d'horloge (5) règle l'horloge interne (8 ; 8A) en avant ou en arrière d'une différence temporelle Δt calculée de la façon suivante :

$$\Delta t = (Ta + Tb)/2 - Ts$$

où Ta est un temps auquel la requête est transmise, Tb est un temps auquel l'élément de données temporelles exprimant le temps standard arrive et Ts est le temps standard.

EP 1 808 848 B1

**Fig. 1**

100

1 KEYBOARD
1a
1b

2 MANIPLATING BOARD (SWITCHES)

3 DETECTOR

4 DETECTOR

9 IMAGE PRODUCING SYSTEM

12 ELECTRONIC TONE GENERATOR

13 EFFECTORS

14

15

SHARED BUS SYSTEM

6 ROM

7 RAM

5 CPU

8 INTERNAL CLOCKS

10 EXTERNAL MEMORY DEVICE

11 I/F

400 COMMUNICATION NETWORK

300 SERVER COMPUTER INT.CLK
300a

200 MUSIC STATION ...

Fig. 2

Fig. 3

Fig. 4

EP 1 808 848 B1

**Fig. 5**

28

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005266337 A
- US 6751232 B1
- US 20050056141 A1
- JP 2005266337 B